(19) Europäisches Patentamt
European Patent Office
Office européen des brevets

(11) **EP 2 387 279 A1**

(12) **EUROPEAN PATENT APPLICATION**

(43) Date of publication:
**16.11.2011 Bulletin 2011/46**

(51) Int Cl.:
**H04W 60/04** (2009.01)

(21) Application number: **10004981.6**

(22) Date of filing: **11.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Panasonic Corporation**
**Kadoma-shi**
**Osaka 571-8501 (JP)**

(72) Inventors:
• **Velev, Genadi**
  **63225 Langen (DE)**
• **Bachmann, Jens**
  **63225 Langen (DE)**
• **Aoyama, Takahisa**
  **Osaka 540 6207 (JP)**
• **Ikeda, Shinkichi**
  **Osaka 540 6207 (JP)**

(74) Representative: **Grünecker, Kinkeldey,**
**Stockmair & Schwanhäusser**
**Leopoldstrasse 4**
**80802 München (DE)**

(54) **Cell (re)selection in a heterogeneous mobile communication system**

(57)     The invention relates to methods for cell (re)selection within a heterogeneous mobile communication network. Furthermore, the invention also relates to a mobile terminal and a mobility management entity that are performing these methods. The inventions suggests a cell (re)selection scheme, which is providing a mechanism to determine at a mobile terminal whether it is remaining within a micro-cell's footprint or whether it can be expected that the mobile terminal only perceives a high signal quality from the micro cell for a short time duration. In the first case, the mobile terminal may advantageously decide to camp on the micro cell, i.e. to select the micro cell as its new serving cell, while in the latter case the mobile terminal should preferably stay camping in its current serving cell, which is typically a macro cell.

Fig. 8

EP 2 387 279 A1

**Description**

**FIELD OF THE INVENTION**

The invention relates to methods for cell (re)selection within a heterogeneous mobile communication network. Furthermore, the invention also relates to a mobile terminal and a mobility management entity that are performing these methods. The invention is inter alia applicable to a 3GPP LTE-A system as standardized by the 3rd Generation Partnership Project (3GPP).

**TECHNICAL BACKGROUND**

**3GPP Long Term Evolution (3GPP LTE)**

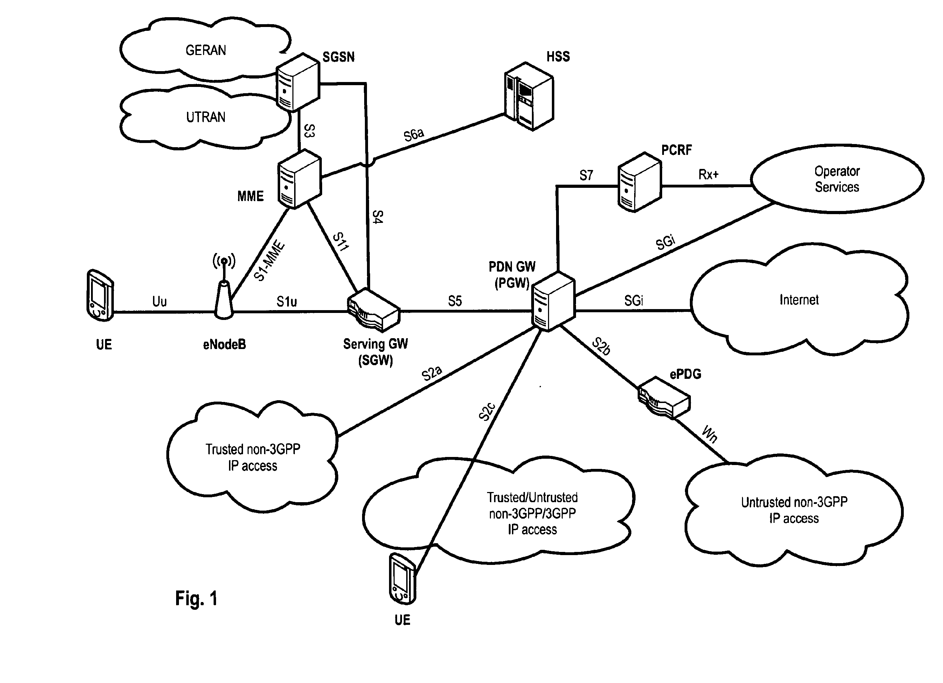

The 3rd generation Partnership Project (3GPP) organization specifies the architecture of mobile cellular networks like Global System for Mobile Communications (GSM) and Universal Mobile Telecommunications System (UMTS). The latest mobile network architecture defined by the 3GPP is called Evolved 3GPP Packet Switched Domain - also known as the Evolved Packet System (EPS). The EPS combines an Evolved Packet Core (EPC) network that is able to connect a new generation of an access network technology called Evolved Universal Terrestrial Radio Access Network (E-UTRAN) as well as the pre-successor of the E-UTRAN called Universal Terrestrial Radio Access Network (UTRAN). A description of the EPS can be found in 3GPP TS 23.401: "General Packet Radio Service (GPRS) enhancements for Evolved Universal Terrestrial Radio Access Network (E-UTRAN) access", version 9.3.0, December 2009 (available at http://www.3gpp.org and incorporated herein by reference). Fig. 1 gives an overview on the entities and interfaces between the entities of the EPS. The 3GPP mobile network architecture provides two data packet gateways located in the EPC supporting the user equipment's mobility: The Serving Gateway (SGW) and Packet Data Network Gateway (PDN-GW, also abbreviated PGW below). The SGW terminates the interface towards the radio access networks, e.g. the UTRAN or the E-UTRAN. The mobility within one radio access network (UTRAN or E-UTRAN) is access specific and not described in this document. The mobility within the EPC is managed by the PGW. As described in 3GPP TS 23.401, the mobility management in the EPC between the PGW and the SGWs can be based either on the Proxy MIPv6 (PMIP) protocol or on the GPRS Tunneling Protocol (GTP). The PGW performs the function of Local Mobility Anchor (LMA) in case of PMIPv6 and the function of GTP tunnel endpoint in case of GTP. The interface between the SGW and the PGW is called S5 and it can be based either on the GTP or the PMIPv6 protocol. The PGW further performs IP address allocation to the user equipment (UE) and packet filtering (e.g. deep packet inspection, packet screening, etc.) in order to map the user equipment's traffic to appropriate QoS level

In the 3GPP mobile network the mobile terminal (i.e. the user equipment) is attached to the access network via the NodeB in the UTRAN access and via the evolved NodeB (eNodeB) in the E-UTRAN access. The NodeB and eNodeB entities are known as base station in other mobile networks. A common denotation for the NodeB and eNodeB used in this document is (e)NodeB. Assuming the E-UTRAN access, the eNodeB entity is connected through wired lines to one or more SGWs via the S1-U interface ("U" stands for "user plane") and to the Mobility Management Entity (MME) via the S1-MME interface. The S1-U interface is based on the GTP protocol.

In the older releases of the 3GPP-based cellular network it was usual that the base stations, (e)NodeBs, are fixed connected to the core network. However, in the future cellular network architectures it could be possible to have a wireless (e)NodeBs that have smaller coverage area than the usual fixed (e)NodeBs. Further in this document the wireless (e)NodeBs are called Relay Nodes (RN). The (e)NodeB can be referred as a macro cell and the relay node as a micro cell because the relay node has a smaller coverage footprint. A cellular network that consists of multiple cells with different characteristics (e.g. macro cells, micro cells or pico cells) can be called heterogeneous network.

**EPS Connection Management States**

When a user equipment is attached (i.e. registered) to a 3GPP-based cellular network, the user equipment can be in two different connections management states: IDLE and CONNECTED state. This section focuses on the user equipment in IDLE state. User equipment mobility in CONNECTED state is described roughly because it is not of great significance for the present invention.

The user equipment is in IDLE state when there is no data for transmission and the radio resources are released, but the user equipment still has a valid IP configuration. A user equipment in IDLE state doesn't have a radio association (i.e. Radio Resource Connection, RRC) with the eNodeB, and therefore, there are no established signaling and data bearers. Further, there is no Non-Access Stratum (NAS) signaling connection between the user equipment and the network (e.g. to the MME) and also, there is no S1 connection between the eNodeB and the SGW.

In the IDLE state, the network (e.g. MME) assigns for each user equipment an area consisting of one or multiple eNodeB cells where the user equipment may move without performing any signaling to the network, i.e. the network just knows that the user equipment is within this area but does not know the exact location.

In the 3GPP EPS architecture such an area is identified by the amount of IDs of the eNodeB cells forming the area. Using the 3GPP terminology this area may be called a Tracking Area (TA) for the user equipment and the tracking area is identified by the list of the identifiers of all eNodeB cells included in the tracking area. The list of eNodeB cell identifiers is called Tracking Area Identifier (TAI) list, since each eNodeB has a globally unique Tracking Area Identifier. The network (e.g. MME) generates the TAI list for each user equipment and informs the user equipment about the tracking area (i.e. about the TAI list) assigned to the user equipment. The tracking area identifier list is transmitted from the MME to the user equipment in one of the following messages: "Attach Accept", "TAU Accept" or "GUTI Reallocation Command". More information about these messages can be found in 3GPP TS 23.401 mentioned previously herein.

The user equipment in IDLE mode periodically scans the broadcast signals of the eNodeBs. The user equipment chooses the eNodeB with the best signal quality and decides to start reading the system information broadcasted by this eNodeB. After reading the cell's system information the user equipment decides to reside (also known as "camp") on this cell, i.e. the user equipment monitors the paging broadcast channel of this eNodeB cell. The above procedure of choosing a cell for camping is done passively, i.e. the user equipment listens to broadcast signals and reads broadcast information, but the user equipment does not transmit anything to the eNodeB. More information about the user equipment mobility in IDLE state and the cell selection procedure will be given below.

When the user equipment moves to a new eNodeB cell and detects that the tracking area identifier of the new eNodeB cell is not included in the user equipment's tracking area identifier list, the user equipment detects that it has moved out of its tracking area and starts a Tracking Area Update (TAU) procedure, which updates the user equipment location in the MME. To summarize, the tracking area may be considered as an amount of eNodeB cells where the user equipment can move in IDLE state without performing a tracking area update procedure.

When a non-access stratum signaling connection needs to be established between the user equipment and the MME, e.g. due to the tracking area update procedure when moving to a new tracking area, the user equipment and the MME enter the CONNECTED state. Initial non-access stratum messages that initiate a transition from IDLE to CONNECTED state are Attach Request, Tracking Area Update Request, Service Request or Detach Request. In order to send the initial non-access stratum message, the user equipment first establishes a Radio Resource Control (RRC) connection to the eNodeB over the air interface (Uu interface). During the RRC connection establishment the user equipment and eNodeB get synchronized and establish the Signaling Radio Bearers (SRB) that can be used for the transport of the non-access stratum messages.

In the CONNECTED state the user equipment and the MME have an active non-access stratum signaling connection. If there are also data packets for transmission, the corresponding S1 connection between the eNodeB and the SGW is established. In CONNECTED state, the user equipment location is known in the MME with the accuracy of a serving eNodeB and the mobility of user equipment is handled by the handover procedure controlled by the network. When the network (usually the eNodeB) detects that the user equipment is not sending/receiving data, the network (usually the eNodeB) may decide to release the radio resources and the S1 connection, and as a result, the user equipment transits from CONNECTED to IDLE state. Also the MME changes the state for the user equipment to IDLE state.

**UE Mobility in IDLE state and Cell Selection Procedure**

As mentioned above, the network (e.g. the MME) maintains a tracking area identifier list per user equipment. The tracking area identifier list contains all tracking area identifiers of the cells where the user equipment is allowed to camp without performing tracking area update procedure. In IDLE state, the user equipment camps on the cell with the best signal quality, i.e. on the "best" cell. The cell, on which the user equipment camps, is called "serving cell". In the serving cell, the user equipment scans the broadcasted System Information Blocks (SIBs, whereas the first block thereof is the so-called Master Information Block, MIB). Below there are some examples of the information that may be contained in the system information blocks:

- paging slots, i.e. in which time slots the paging in the cell is performed. The user equipment can learn when to listen for paging during camping on this cell;

- neighbor cell information for cell reselection procedure: e.g. intra-frequency or inter-frequency cells *(intraFreqNeighbCellList* and *interFreqNeighCellList,* list of forbidden cells *(BlackCellList* - being a 3GPP specific implementation of a "blacklist" referred to herein below), information for inter-RAT handover and others. The parameters *intraFreqNeighbCellList* and interFreqNeighCellList and *BlackCellList* contain the Physical Cell ID (PCI) of the neighbor cells. The user equipment can read the physical cell ID without reading the system information blocks; and many others parameters.

- absolute priority of neighbor cell frequency bands *(cellReselectionPriority)* (not needed, if the neighbor cells are operating on the same frequency band as the serving cell): priority for the frequency bands that the user equipment shall scan first when cell selection procedure is to be performed;

- frequency-specific signal strength offset for equal priority LTE frequency bands *(Qoffsetfrequency);*

- signal strength offset between 2 cells *(Qoff s,n).* For example *Qofft s,n* means the signal offset between the serving cell ("s" stays for serving cell) and the neighboring cell ("n" stays for neighboring cell).

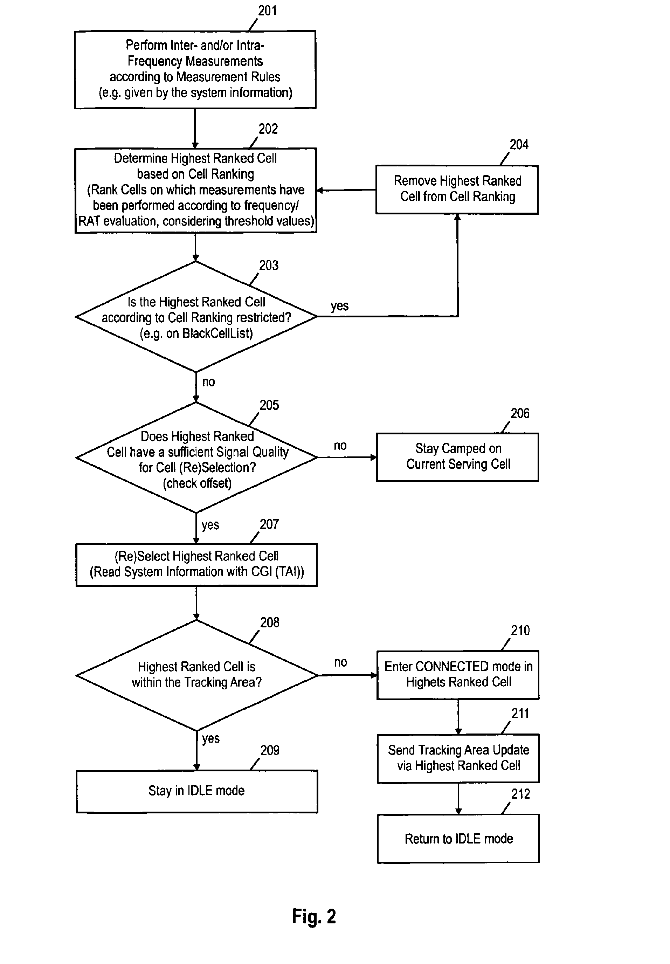

The user equipment uses the above parameters learned from the SIBs for the so-called cell (re)selection procedure, which is performed within the user equipment for selecting a suitable (new) serving cell for camping. The cell (re)selection procedure in the user equipment as known from 3GPP TS 36.304; "User Equipment (UE) procedures in idle mode"; version 9.1.0, December 2009 (available at http://www.rgpp.org and incorporated herein by reference) is shown in Fig. 2.

The first step 201 of the cell (re-)selection procedure is to perform an inter-frequency or intra-frequency measurements for neighboring cells. The measurements for cell reselection are performed less often, in case the quality of the current serving cell signal is good. The user equipment first measures/scans the frequency band with highest priority (reported in the system information of the current serving cell).

In this scanning process the user equipment reads only the physical cell ID transmitted in the broadcast signal (pilot signal) of the respective eNodeBs. If the user equipment discovers multiple cells during the frequency scanning, the user equipment ranks 202 the cells according to the signal strength and the parameters received in the system information (SIB) of the current serving cell. The following equations highlight the criteria for ranking of cells within the same frequency band ("intra-frequency") or between inter-frequency cells with equal priority:

$$Rs = Qmeas,s + Qhyst,s \qquad\qquad (Equation\ 1)$$

$$Rn = Qmeas,n + Qoff\ s,n \qquad\qquad (Equation\ 2)$$

where the *Rs* and *Rn* mean the rankings for the serving and neighboring cells, the *Omeas,s* and *Omeas,n* are the measured signaled quality for the serving and neighbouring cells, the *Qhyst,s* is a parameter for hysteresis value for ranking criteria of the serving cell and *Qoff s,n* specifies the offset between the serving and neighboring cells of equal priority.

The user equipment then determines 203 whether the highest ranked cell is "forbidden" (i.e. the system information indicates that the user equipment is not allowed to camp on the cell). The list of forbidden cells is broadcasted in the SIB information of the current/last serving cell in the *BlackCellList* parameter. If the highest ranked cell is a forbidden cell, the user equipment ignores the cell in the cell reselection. This is shown in step 204, where the user equipment is removing the forbidden cell from the cell ranking and then determines 702 the now highest ranked cell, where appropriate.

The user equipment chooses the highest ranked cell (which is not in the list of forbidden cells for camping, i.e. whose PCI is not in the *BlackCellList* and compares 205 the signal with the signal of the current serving cell. The user equipment decides to start camping on a new serving cell if

- the signal of the serving cell drops below a certain threshold (e.g. *Qoffsets,n* or *Qoffsetfrequency* parameter) or

- the signal of a neighbor cell is better for a certain period of time.

If there is no cell found as a suitable cell for selection as the new serving cell, the user equipment may - depending on the configuration - scan another frequency band. If the highest ranked cell or best cell is not suitable due to being part of the "list of forbidden TAs for camping" *(BlackCellList,* the user equipment may select another cell with weaker signal strength on this frequency band, only if the Intra-Frequency Radio Interference bit (IFRI-bit) in the highest ranked cell is set (i.e. equals 1). Otherwise the user equipment chooses a cell from other frequency band, if available. If the criteria for cell (re)selections are not fulfilled, the user equipment stays camped 206 on its current serving cell.

If the user equipment has determined cell that is providing sufficiently high signal quality to qualify for selection as the new serving cell, the user equipment attaches 207 to this cell and synchronizes to its eNodeB to read the system information of the new serving cell. The system information comprises a cell global identifier (see below), based on which the user equipment can determine 208, whether the new serving cell is within its tracking area. If the new serving cell is within the user equipment's tracking area, the user equipment can remain 209 in IDLE mode and does not need to perform a tracking area update (TAU) procedure. Otherwise, the user equipment enters 210 CONNECTED mode in the new serving cell to send 211 a tracking area update to its serving MME through the new serving cell. After finishing the tracking area update procedure with the MME, the user equipment returns 212 to IDLE mode.

Please note that there are two different cell identifiers that apply for both micro and macro cells. The Cell Global Identifier (CGI, or in E-UTRAN Cell Global Identifier, ECGI) is broadcasted in the system information and can be read by the user equipment after the user equipment decides to camp on that cell. The CGI is globally unique because it includes the Mobile Country Code and the Mobile Network Code. The CGI is also referred to as the Tracking Area Identifier (TAI).

The Physical Cell Identifier (PCI) is broadcasted in the physical layer signal and the user equipment can read the PCI during the inter-frequency or intra frequency measurements for the signals of the neighbor cell and determines the signal strength to rank a cell. In contrary to the CGI, the PCI is not globally unique. In 3GPP LTE, there are 256 PCIs available in each cellular network, and hence, the PCIs are used repeatedly, but in such a way that two cells with the same PCI are neither overlapping nor a neighbor cells. Usually the user equipment scans for neighbor cells in the same frequency band as the serving cell (aka "intra-frequency"). This means that the user equipment can discover "intra-frequency" neighboring cells without reading the SIB of the serving cell. The SIB indicates the priority of frequency bands different from the frequency of the serving cell (aka "inter-frequency"). However, the user equipment may under certain conditions use an autonomous search function, i.e. the user equipment may scan in frequency bands stored from previous scanning or pre-configured in the user equipment. This is especially applicable when the cellular network is heterogeneous (i.e. a combination of macro and micro cells) and the micro cell information (e.g. frequency band) is not broadcasted in the SIBs of the serving macro cells. To the biggest extend the cell (re)selection procedure is similar for macro and micro cells. This means the user equipment in IDLE mode may move between eNodeB and (mobile) relay node cells transparently, as long as the cell in not in the list of forbidden cells for camping *("BlackCellList')*.

3GPP TS 36.304 specifies that the user equipment may be in one of three different mobility states: normal-mobility, medium-mobility and high-mobility state. The mobility state is determined according to the number of cell (re) selections during a given time period. The parameters for determining the mobility state (e.g. number of cell reselections, given time period) are sent in the system information broadcast of the serving cell.

Details about the user equipment mobility in IDLE state and the cell (re)selection procedure may be found in 3GPP TS 36.304 mentioned above.

**Relay Node (RN)**

There are recent activities in the 3GPP to introduce a wireless relay node (RN) entity to extend the coverage of the eNodeB (macro) cell. The relay node forms an independent physical cell and from the user equipment perspective the relay node is seen as a usual eNodeB. The relay node is connected via a wireless link to the eNodeB and the relay node can be stationary or mobile. The relay node architecture deployment foresees that the relay node emulates an eNodeB to the user equipment, i.e. the user equipment would see the relay node as a usual eNodeB. From the network side, the relay node is seen a usual user equipment by the eNodeB. The eNodeB, to which the relay node is connected, is called Donor eNodeB (DeNodeB) and operates as usual eNodeB. The different alternatives for deployment of relay node in the 3GPP network architecture are described in 3GPP TS 36.806; "Relay architectures for E-UTRA (LTE-Advanced)"; version 2.0.0, February 2010 (available at http://www.rgpp.org and incorporated herein by reference).

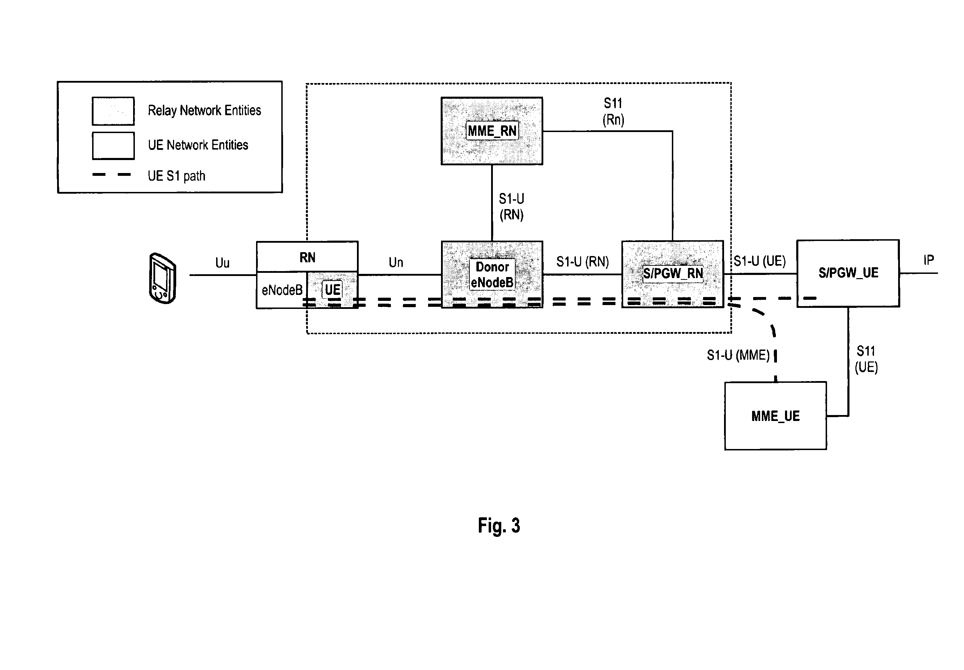

In the following the focus is on so called architecture A where both user equipment's user plane (S1-U) and control plane (S1-MME) interfaces are terminated at the relay node. Architecture A has 3 alternatives called Alt. 1, 2 and 3. Fig. 3 shows a simplified deployment of architecture A in the 3GPP EPS network. Two types of boxes - gray and white - can be seen in the Fig. 3.

The gray boxes represent the additional entities needed to deploy the relay node and to manage the mobility and data forwarding for the relay node. The white boxes represent the usual EPS entities responsible for the user equipment's mobility and data forwarding in the network. The user equipment is connected to the relay node via the usual Uu interface, i.e. there are no changes compared to the EPS specification in 3GPP TS 23.401. The relay node entity can be represented as a composition of eNodeB and user equipment.

The user equipment part of the relay node is connected to the DeNodeB via the Un interface that is currently under specification. The connectivity and mobility of the relay node is managed like a user equipment. For this purpose there are additional MME and SGW/PGW (simplified expression for the SGW and PGW, called for simplification S/PGW) present to serve the relay node. The notation of these entities MME_RN and S/PGW_RN means that they serve the relay node (or more precisely the user equipment part of the relay node). Correspondingly the user and control plane interfaces for the relay node are called S1-U (RN) and S1-MME (RN). The user equipment's user and control plane interfaces are shown with interrupted lines between the eNodeB part of the relay node and the MME_UE and S/PGW_UE.

The target during the specification of the relay node network architecture is/was that the EPS entities (i.e. MME and S/PGW) are not modified (or at least less modified) and have the same (or similar) functionality as specified in TS 23.401. As shown in Fig. 3, all user equipments' packets for control signaling (to the user equipment's MME) and data packets (to the user equipment's S/PGW) traverse the data bearers of the relay node. With other words, all user equipment's packets are forwarded over the relay node's S/PGW before reaching the user equipment's EPC entities MME and S/PGW.

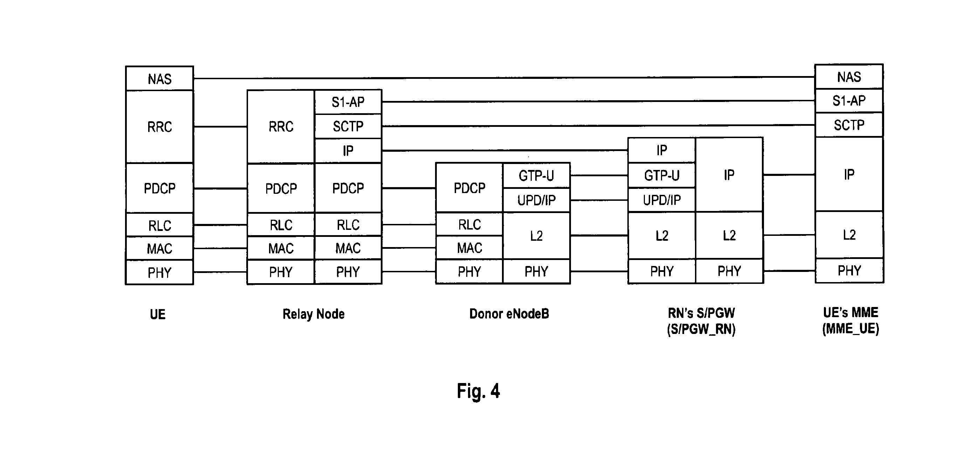

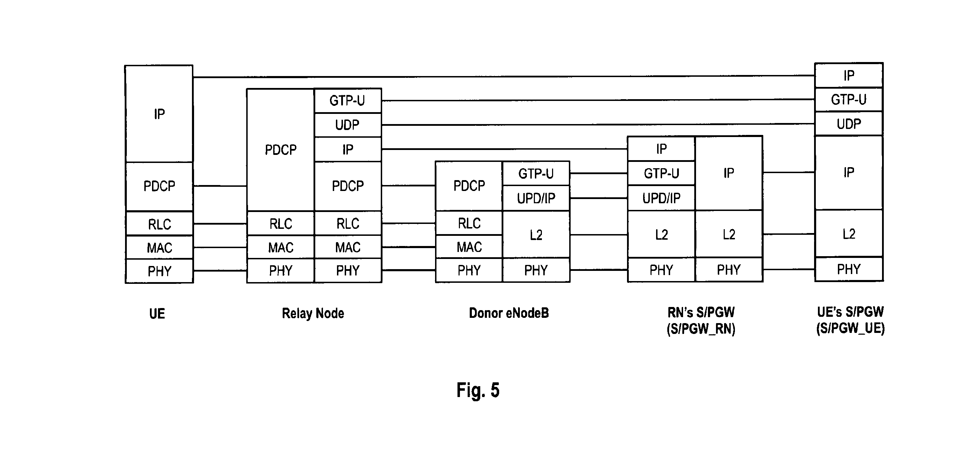

Fig. 4 and Fig. 5 are related to Fig. 3 and illustrates the protocol stacks between the user equipment and user equipment's MME in the control plane (Fig. 4) and between the user equipment and user equipment's S/PGW in the user plane (Fig. 5). As Fig. 5 shows, the S1-U (GTP for the user plane, GTP-U) and S1-MME (S1-Application Protocol, S1-AP) interfaces for the user equipment are terminated at the relay node. In general, the S1-AP protocol provides the signaling service between the eNodeB and MME. The S1-AP messages are carried over the Stream Control Transmission Protocol (SCTP) that acts as transport protocol.

In the control plane (Fig. 4), there is a direct non-access stratum connection between the user equipment and the user equipment's MME. The S1-MME (UE) packets are encapsulated over the S1-U (RN) between the DeNodeB and the relay node's S/PGW. It can be seen that from user equipment perspective the relay node is acting as a usual eNodeB. The S1-AP packets from the relay node are carried over the Un and S1-U (RN) interfaces over the data bearers as usual data packets.

In the user plane, there is a direct IP connection between the user equipment and the user equipment's S/PGW. The GTP-U packets of the S1-U connection between the relay node and the user equipment's S/PGW are tunnelled over another GTP-U tunnel for the S1-U connection between the DeNodeB and the relay node's S/PGW. The user plane in Fig. 5 shows that the relay node (or more precisely the user equipment part of the relay node) has also a direct IP connection to the relay node's S/PGW. With other words, the user equipment's data packets are forwarded over one GTP-U tunnel between the relay node and the user equipment's S/PGW and additionally are encapsulated over another GTP-U tunnel between the DeNodeB and the relay node's S/PGW.

Further details and explanations about the relay node architecture discussed in the 3GPP organization can be found in 3GPP TS 36.806.

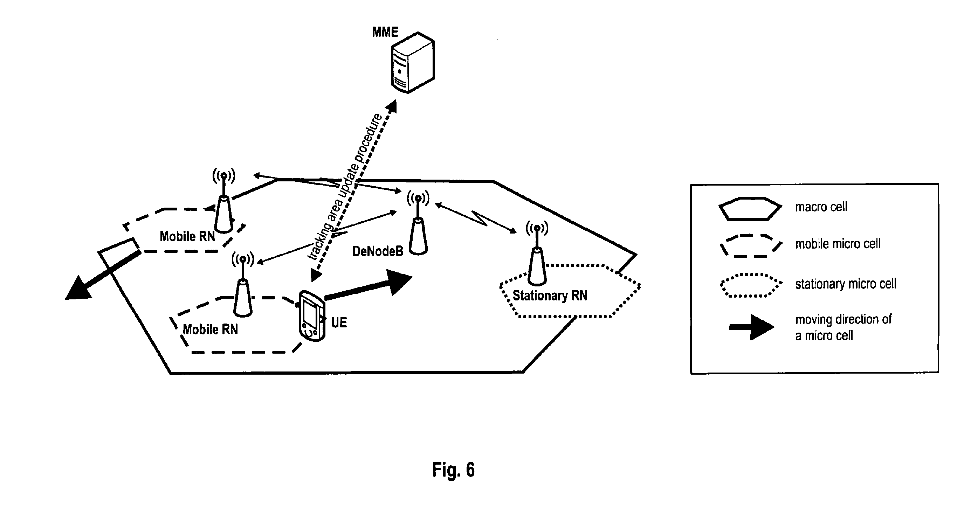

In this invention, a heterogeneous cellular network is assumed, where the micro cells could be controlled by a stationary relay node or mobile relay node (M-RN). An exemplary scenario for a 3GPP LTE-A is shown in Fig. 6. The DeNodeB macro cell may includes one stationary relay node cell (RN3) and two mobile relay node cells (M-RN1 and M-RN2). The M-RN cells can be for instance located within a bus or train. The M-RN1, M-RN2 and NR3 are connected to the DeNodeB via the Un interfaces. However, the M-RN1 and M-RN2 can move and handover to another macro cells. Each M-RN controls a separate physical cell. Therefore, the identifiers PCI and CGI (TAI) of the DeNodeB cell and of the M-RN cells are different. Since there could be many M-RNs within a cellular network, in order to avoid the overlapping of PCIs between (D)eNodeB cells, it's assumed that each M-RN has a separate TAI from the macro cells.

It is assumed that the user equipment is in IDLE state and camps on the macro DeNodeB cell. As described above, the user equipment chooses to camp on the "best" cell that could a macro cell, a stationary micro cell or a mobile micro cell. If a mobile micro cell, for instance the one controlled by M-RN2, moves in the vicinity of the user equipment and the conditions for cell reselection are fulfilled, the user equipment would desire to camp on the micro cell controlled by M-RN2. If the micro cell of the M-RN2 does not belong to the user equipment's tracking area identity list, a location registration is performed. In other words, if the M-RN2's tracking area identifier is not included user equipment's TAI list, the user equipment should perform tracking area update procedure when starting to camp on the micro cell controlled by M-RN2. During the tracking area update procedure, the MME generates a new TAI list for the user equipment including the M-RN2's tracking area identifier. After the tracking area update procedure is performed by the user equipment to register the M-RN2's tracking area with the MME, the user equipment transits from CONENCTED state into IDLE state.

However, if the M-RN2 moves further and consequently the signal quality drops, the user equipment would start measurements for cell reselection again. If in the meantime another mobile relay node, e.g. M-RN1, has moved in the vicinity of the user equipment, the user equipment may select to camp on the micro cell controlled by M-RN1. If the M-RN1's TA is not in the user equipment's TAI list, the user equipment shall perform the TAU procedure again and transit from IDLE to CONENCTED state. After the user equipment registers the M-RN1's TA with the MME, the user equipment transits again from CONENCTED to IDLE state.

The above example shows that in the scenarios of mobile relay nodes the user equipment may perform frequent cell reselection procedure and the corresponding tracking area update procedure. This effect can be observed for instance in train or bus stations where the vehicles (trains or busses) - controlling respective micro cells - stop for a while so that the user equipment can measure the mobile relay node cell for a given time which is required in order to perform the cell reselection procedure. Each tracking area update procedure causes the user equipment to transit from IDLE to CONNECTED state and accordingly RRC connection establishment is performed. Thus, each tracking area update procedure consumes user equipment's battery power and the bandwidth in the cell, Since messages for the user equipment's non-access stratum signaling connection needs to be scheduled and transmitted over the air which limits the available bandwidth for other user equipments in the same cell.

## SUMMARY OF THE INVENTION

One object of the invention is to suggest a new scheme for performing a cell (re)selection of a mobile terminal in a heterogeneous mobile communication system. A further object of the invention is to suggest a scheme for performing a cell (re)selection of a mobile terminal in a heterogeneous mobile communication system, which comprises mobile micro cells. Furthermore, another object of the invention is to reduce a mobile terminal's battery consumption due to performing frequent location updates with the network.

The object is solved by the subject matter of the independent claims. Advantageous embodiments of the invention are subject to the dependent claims.

A first aspect of the invention is to suggest a cell (re)selection scheme, which is providing a mechanism to determine at a mobile terminal whether it is remaining within a micro-cell's coverage area (footprint) or whether it can be expected that the mobile terminal only perceives a high signal quality from the micro cell for a short time duration. In the first case, the mobile terminal may advantageously decide to camp on the micro cell, i.e. to select the micro cell as its new serving cell, while in the latter case the mobile terminal should preferably stay camped in its current serving cell, which is typically a macro cell.

For mobile micro cells, i.e. micro cells controlled by a mobile entity such as a mobile relay node, the first aspect can be understood as to provide means for the mobile terminal to detect whether it is moving with the micro cell or not. Hence, in the first case, the mobile terminal may select the micro cell as its serving cell, while in the second case, the mobile terminal should stay camped at its current serving cell.

According to the first aspect of the invention, the decision whether to select a micro cell as the new serving cell is based on an evaluation of the signal quality within the micro cell and the current serving cell (e.g. a macro cell) for a given time period (threshold time period). Based on the offset of the signal quality in the micro cell and the signal quality in the serving cell - which may be repeatedly determined over the threshold time period at the mobile terminal - the mobile terminal decides whether to request its mobility management entity to select the micro cell as its new serving cell, e.g. by sending a tracking area update. The mobile terminal thereby uses two threshold values to which the offset is compared. The first threshold value is higher than the second threshold value. If the mobile terminal is recognizes that the offset between the signal quality within the micro cell and signal quality in the current serving cell is within the range defined by the first and second threshold value for a given period of time, the mobile terminal decides to select the micro cell as its new serving cell. If the signal quality within the micro cell and signal quality in the current serving cell is higher than the first threshold value, i.e. the signal quality is micro cell is significantly better than that of the serving cell, the mobile terminal may select the micro cell as the serving cell even before expiry of the threshold time period. For the exemplary scenario of a mobile micro cell, the evaluation of the offset for a given time period allows the detection of whether the mobile terminal moves with the micro cell or not.

The offset between the signal quality within the micro cell and signal quality in the current serving cell may be the ratio of the two signal qualities or a difference or another value that is indicative of the relation of the signal quality in the micro cell in comparison to the serving cell.

In line with this first aspect of the invention, a method for cell (re)selection within a heterogeneous mobile communication network is provided. The heterogeneous mobile communication network comprises macro cells and micro cells and a mobility management entity managing mobility of a mobile terminal. The mobile terminal camps in a macro cell as its serving cell. The macro cells may be for example controlled by a stationary base station (eNodeB). The micro cells may be for example controlled by a stationary or mobile relay node or a home base station (home eNodeB). Furthermore, the micro cell may also be a pico cell.

In this method, the mobile terminal repeatedly determines the signal quality within the macro cell it is camping on, and further the signal quality within a micro cell of the heterogeneous mobile communication system. This determination is made while the mobile terminal camps in the macro cell. The mobile terminal selects the micro cell as the new serving cell, in case the following conditions are fulfilled:

- the difference between the signal quality within the micro cell and the signal quality within the macro cell the mobile terminal is camping on is lower than the first threshold value but larger than a second threshold value for a threshold time period, and

- the mobility management entity confirms the serving cell (re)selection in response to a tracking area update request message for the micro cell.

Please note that although it is referred to a difference between the signal quality within the micro cell and the signal quality within the macro cell the mobile terminal is camping on, the invention may likewise evaluate a ratio between the signal quality within the micro cell and the signal quality within the macro cell the mobile terminal is camping on or another value that indicates the relation of the signal quality in the micro cell and the serving cell of the mobile terminal.

Furthermore, the mobile terminal may also further select the micro cell as the new serving cell, in case the following conditions are fulfilled:

- the difference between the signal quality within the micro cell and the signal quality within the macro cell the mobile terminal is camping on is above or equal to a first threshold value, and

- the mobility management entity confirms the serving cell (re)selection in response to a tracking area update request message for the micro cell.

In both cases outlined above the tracking area update may be a non-periodic tracking area update.

In a further embodiment of the invention, the mobile terminal only selects the micro cell as its new serving cell, if the difference between the signal quality within the micro cell and the signal quality within the macro cell the mobile terminal is camping on is above or equal to a first threshold value for a threshold time period. Advantageously, in an exemplary implementation, the duration of the threshold time period for monitoring if the difference between the signal quality within the micro cell and the signal quality within the macro cell the mobile terminal is camping on is above or equal to a first threshold value for a threshold time period is shorter than the duration of the threshold time period for monitoring if the difference between the signal quality within the micro cell and the signal quality within the macro cell the mobile terminal is camping on is lower than the first threshold value but larger than a second threshold value for a threshold time period.

As outlined above, in some embodiment the micro cell selected as the new serving cell by the mobile terminal may be a micro cell controlled by a mobile relay node. In this case the mobile terminal may for example detect that it is moving with the micro cell and selects the micro cell as the new serving cell, in case:

- the signal quality within the micro cell is approximately constant within the threshold time period,

- the signal quality within the macro cell is deteriorating within threshold time period, and

further finding that the difference between the signal quality within the micro cell and the signal quality within the macro cell the mobile terminal is camping on is lower than the first threshold value but larger than a second threshold value for a threshold time period.

In a more specific embodiment of the invention, the mobile terminal further receives from the mobility management entity tracking area information. This information comprises a list of cell identifiers (e.g. tracking area identifiers) indicating one or more cells the mobile terminal is allowed to select as its serving cell without sending a tracking area update request message (or formulated differently, indicating one or more cells the mobile terminal is allowed to camp on without sending a tracking area update to the mobility management entity). In one exemplary embodiment, this list of cell identifiers (initially) indicates only macro cells.

Optionally, the mobile terminal may receive from a base station controlling the current serving cell a further list of cell identifiers (e.g. physical cell identifiers) indicating one or more cells the mobile terminal is not allowed to select as its serving cell (or formulated differently, indicating one or more cells the mobile terminal is not allowed to camp on). This list may also be referred to as a "blacklist".

The micro cell selected by the mobile terminal may be for example a cell that is indicated to the mobile terminal by the current serving base station as a cell the mobile terminal is not allowed to select as its serving cell.

In a further embodiment of the invention the mobile terminal further determines whether the difference between the signal quality within the micro cell of a relay node and the signal quality within the macro cell the mobile terminal is camping on is above or equal to a first threshold value, and if not, further determining whether the difference between the signal quality within the micro cell of a relay node and the signal quality within the macro cell the mobile terminal is camping on is lower than the first threshold value but larger than a second threshold value for a threshold time period. Alternatively, the mobile terminal may check the threshold values in a reversed order.

As indicated above, in case the mobile terminal wants to select the micro cell as its new serving cell, the mobile terminal transmits a tracking area update request message to the mobility management entity. The tracking area update comprises an identifier of the micro cell so as to indicate to the mobility management entity the desired micro cell as new serving cell. Furthermore, the mobile terminal may transmit the tracking area update request message through its current serving cell to the mobility management entity (i.e. the tracking area update procedure is not requiring the establishment of an RRC connection to the micro cell potential becoming the new serving cell).

In response to the tracking area update request message, the mobile terminal may receive a tracking area update response message from the mobility management entity indicating whether the mobility management entity is confirming the selection of the micro cell of the relay node as the new serving cell.

One exemplary implementation how the mobility management entity may confirm the selection of the micro cell as the new serving cell may be that mobility management entity includes an identifier of the micro cell within a list of cell identifiers comprised in the tracking area update response message (assuming that it has not been included thereto before). This inclusion of a cell identifier of the micro cell is indicating to the mobile terminal that it is allowed to select this micro cell as its serving cell. Optionally, the mobility management entity may only comprise the identifier of the micro cell in the tracking area identifier list indicating to the mobile terminal that the mobile terminal is allowed to select the micro cell as its serving cell only, in case the mobility management entity confirms the selection of the micro cell. This option may be advantageous, as the mobile terminal may thereby be forced to send a tracking area update request message to inform the mobility management entity about any other cell the mobile terminal is selecting as serving cell as soon as it is leaving the micro cell.

Additionally, if the cell identifier of the micro sell is in a "blacklist" and the mobile terminal intends to select as its serving cell, the mobility management entity could indicate that it confirms the selection of the micro cell as the new serving cell by including the cell identifier of the micro cell in the list of cell identifiers in the tacking area response message. In other words, the cell identifiers in the tracking area update response message obtained from the mobility management entity may overwrite in the mobile terminal the list of identifiers of cells not allowed for camping (i.e. the "blacklist") obtained from the base station.

In another embodiment of the invention, the mobile terminal receives and stores system information from the micro cell upon the signal quality within the macro cell exceeding the second threshold value. This mobile terminal may stores the system information of the micro cell even if the cell identifier of the micro cell is included in the list of cells not allowed for camping (i.e. the "blacklist").

In a further exemplary embodiment of the invention, the mobile terminal performs periodic tracking area update procedure (i.e. sending tracking area update request message) to the mobility management entity. In case the difference between the signal quality within the micro cell of a relay node and the signal quality within the macro cell the mobile terminal is camping on is lower than the first threshold value but larger than a second threshold value for a threshold time period, the mobile terminal may transmit in the tracking area update request message the micro cell identifier. The mobile terminal stores the included micro cell identifier, which is included in the tracking area update request message, from the measurements for cell (re)selection as described above.

Alternatively, in another embodiment of the invention, the mobile terminal determines its mobility state (normal, medium or high mobility state). The mobility state may be determined according to the number of cell (re)selections performed by the mobile terminal in a given time period. The mobile terminal may send the tracking area update request message either immediately (proactive tracking area update) or waits for the next scheduled periodic tracking area update, depending on its mobility state. For example, in normal mobility state the mobile terminal may always wait for the next scheduled periodic tracking area update, whereas in medium or high mobility state the mobile terminal the mobile node can send a proactive tracking area update request message.

In another embodiment of the invention, the mobile terminal may increase the frequency of the signal quality measurement within the current serving macro cell and the signal quality within the micro cell of the heterogeneous mobile communication system, e.g. depending on the signal quality measured in the micro cell. If the offset between the signal quality in the micro cell and the macro cell is above a threshold value, e.g. larger than the second threshold value, the mobile terminal may increase the frequency of signal quality measurements in the micro cell and the serving cell. Alternatively, or in addition thereto, the frequency of the signal quality measurement within the current serving macro cell and the signal quality within the micro cell of the heterogeneous mobile communication system may depend on the mobility state of the mobile terminal: the higher the mobility state the more frequent may be the signal quality measurements (i.e. highest frequency of measurements for high mobility state, lowest frequency of measurements for normal mobility state).

While the embodiments above have been considering the operation and adaption of a mobile terminal for an advanced cell (re)selection, a possible adaption of the access network nodes/core network nodes of the mobile communication system is discussed in the following paragraphs. In this context, another exemplary embodiment of the invention is providing a method for cell (re)selection within a heterogeneous mobile communication network. Again the communication network is considered to comprise macro cells and micro cells, wherein the heterogeneous mobile communication network comprises a mobility management entity managing mobility of a mobile terminal, and the mobile terminal is assumed to camp on a macro cell as its serving cell. In this embodiment, the mobility management entity transmits tracking area information to the mobile terminal. The tracking area information comprising a list of cell identifiers indicating one or more cells that the mobile terminal is allowed to select as its serving cell (i.e. it is allowed to camp on) without performing a tracking area update procedure. The mobility management entity further receives a tracking area update request message from the mobile terminal via the macro cell, being the current serving cell of the mobile terminal, whereby the tracking area update request message comprises a cell identifier of a micro cell. The mobility management entity decides whether to allow the mobile terminal to select the micro cell indicated in the tracking area update request message as its new serving cell, and sends an appropriate response message to the mobile terminal.

In case the mobility management entity allows the mobile terminal to select the micro cell as its serving cell, it transmits a tracking area update accept message to the mobile terminal. This tracking area update accept message comprises new tracking area information that indicates to the mobile terminal that it is allowed to select the micro cell as its serving cell. Otherwise, the mobility management entity transmits a transmitting tracking area update reject message to not allow the mobile terminal to select the indicated micro cell as its new serving cell.

Different possibilities are available for the mobility management entity to indicate to the mobile terminal whether the mobile terminal is allowed to camp on the micro cell indicated in the tracking area update request message. For example, one possibility is that the tracking area update accept message indicates to the mobile terminal that the mobile terminal is allowed to select the micro cell as its serving cell by including the cell identifier of the micro cell in a list of cell identifiers indicating one or more cells that the mobile terminal is allowed to select as its serving cell. In a more specific example, the cell identifier of the micro cell is the only identifier comprised in the list of cell identifiers indicating one or more cells that the mobile terminal is allowed to select as its serving cell.

In another embodiment of the invention, the cell identifier of the micro cell indicated in the tracking area update related messages exchanged between mobile terminal and its serving mobility management entity is a cell identifier of global validity (global cell identifier). The global cell identifier of the tracking area update has corresponding cell identifier of local validity (local cell identifier) that is initially comprised in list of cell identifiers indicating one or more cells the mobile terminal is not allowed to select as its serving cell ("blacklist"). As mentioned above, the "blacklist" is provided by the base station of the serving cell of the mobile terminal, e.g. as part of the system information broadcasted in the serving cell. Furthermore, it may be assumed that the list of cell identifiers indicating one or more cells the mobile terminal is not allowed to select as its serving cell is provided to the mobile terminal prior to performing the measurements for cell (re)selection and prior to receiving the tracking area update request message.

The mobile terminal is capable of associating the global cell identifier and the corresponding local cell identifier. If the micro cell is indicated as part of the tracking area of the mobile terminal by the mobility management entity, the mobile terminal considers this indication of the mobility management entity to overwrite the micro cell listing in the "blacklist" provided in the system information of the serving cell.

Further embodiments of the invention are related to the implementation of the methods for cell (re)selection within a heterogeneous mobile communication network described herein in hardware and/or software. Therefore, another embodiment of the invention relates to a mobile terminal for use within a heterogeneous mobile communication network comprising macro cells and micro cells. The heterogeneous mobile communication network comprises a mobility management entity managing mobility of a mobile terminal, and the mobile terminal is assumed to camp on a macro cell as its serving cell. The mobile terminal comprises a measurement unit adapted to repeatedly determine the signal quality within the macro cell the mobile terminal is camping on, and within a micro cell of the heterogeneous mobile communication system, while the mobile terminal camps in the macro cell. Furthermore, the mobile terminal has a selection unit for selecting the micro cell as the new serving cell, in case the following conditions are fulfilled:

- the difference between the signal quality within the micro cell and the signal quality within the macro cell the mobile terminal is camping on is lower than the first threshold value but larger than a second threshold value for a threshold time period, and

- the mobility management entity confirms the serving cell (re)selection in response to a tracking area update for the micro cell.

A processing unit may for example be provided in the mobile terminal in order to determine the difference between the signal quality within the micro cell and the signal quality within the macro cell the mobile terminal is camping on is lower than the first threshold value but larger than a second threshold value for a threshold time period.

In another embodiment of the invention, the mobile terminal's selection unit is adapted to select the micro cell as the new serving cell, in case the following conditions are fulfilled:

- the difference between the signal quality within the micro cell and the signal quality within the macro cell the mobile terminal is camping on is above or equal to a first threshold value, and

- the mobility management entity confirms the serving cell (re)selection in response to a tracking area update for the micro cell.

In a further embodiment of the invention, the mobile terminal comprises a receiver unit adapted to receive tracking area information from the mobility management entity. The tracking area information comprises a list of cell identifiers indicating one or more cells the mobile terminal is allowed to select as its serving cell without sending a tracking area update request message.

According to another embodiment of the invention, the receiver unit of the mobile terminal is adapted to receive from a base station of the current serving cell a further list of cell identifiers indicating one or more cells the mobile terminal is not allowed to select as its serving cell.

The mobile terminal according to an embodiment of the invention comprises a processing unit adapted to determine whether the difference between the signal quality within the micro cell of a relay node and the signal quality within the macro cell the mobile terminal is camping on is above or equal to a first threshold value. Thereby, the mobile terminal's processing unit may be adapted to determine whether the difference between the signal quality within the micro cell of a relay node and the signal quality within the macro cell the mobile terminal is camping on is lower than the first threshold value but larger than a second threshold value for a threshold time period.

The mobile terminal of another embodiment of the invention comprises a transmitter unit adapted to transmit a tracking area update request message to the mobility management entity, wherein the tracking area update request message comprises an identifier of the micro cell.

Moreover, another embodiment of the invention provides a mobility management entity for use within a heterogeneous mobile communication network comprising macro cells and micro cells. The mobility management entity manages the mobility of a mobile terminal and comprises a transmitter unit adapted to transmit tracking area information to the mobile terminal. The tracking area information comprises a list of cell identifiers indicating one or more cells that the mobile terminal is allowed to select as its serving cell without sending a tracking area update. Furthermore, the mobility management entity has a receiver unit adapted to receive a tracking area update request message from the mobile terminal via the macro cell, being the current serving cell of the mobile terminal, wherein the tracking area update request message comprises a cell identifier of a micro cell. Further, the mobility management entity includes a processing unit adapted to decide whether to allow the mobile terminal to select the micro cell indicated in the tracking area update request message as its new serving cell.

The transmitter unit of the mobility management entity may be adapted to transmit a tracking area update accept message to the mobile terminal in case the processing unit decides to allow the mobile terminal to select the micro cell as its new serving cell. The tracking area update accept message comprises new tracking area information that indicates to the mobile terminal that it is allowed to select the micro cell as its serving cell. Moreover, the transmitter unit of the mobility management entity is adapted to transmit a tracking area update reject message to not allow the mobile terminal to select the indicated micro cell as its new serving cell, in case the processing unit decides to allow the mobile terminal to select the micro cell as its new serving cell.

In another embodiment of the invention, the mobility management entity's processing unit is adapted to include to the tracking area update accept message the cell identifier of the micro cell in a list of cell identifiers indicating one or more cells that the mobile terminal is allowed to select as its serving cell, to thereby indicate to the mobile terminal that the mobile terminal is allowed to select the micro cell as its serving cell by.

In another embodiment, the processing unit of the mobility management entity is adapted to only include the cell identifier of the micro cell to the list of cell identifiers.

Another embodiment of the invention provides a computer readable medium that is storing instructions that, when executed by a processor of a mobile terminal or mobility management entity, is causing the mobile terminal, respectively the mobility management entity to perform the steps of the method for cell (re)selection within a heterogeneous mobile communication network according to one of the various embodiments of the invention described herein.

## BRIEF DESCRIPTION OF THE FIGURES

In the following the invention is described in more detail in reference to the attached figures and drawings. Similar or corresponding details in the figures are marked with the same reference numerals.

Fig. 1    shows the general structure of a sub-frame on a downlink component carrier as defined for 3GPP LTE (Release 8),

Fig. 2    shows a flow chart of an exemplary implementation of a cell (re)selection procedure of 3GPP TS 36.304,

Fig. 3    shows a relay node-architecture as defined for 3GPP-LTE,

Fig. 4    illustrates the protocol stacks between the user equipment and user equipment's MME in the control plane,

Fig. 5    illustrates the protocol stacks between the user equipment and user equipment's S/PGW in the user plane,

Fig. 6    shows an exemplary scenario of a heterogeneous communication system including a macro cell (controlled by the DeNodeB) and nested micro cells that are controlled by mobile and stationary relay nodes,

**Fig. 7**     shows the signal quality of the current serving cell (serving (macro) cell) and the candidate micro cell of a mobile relay node (M-RN micro cell),

**Figs. 8 & 9**     show flow charts of cell (re)selections procedures according to different embodiments of the invention,

**Fig. 10**     shows a flow chart of an alternative implementation of Fig. 8 or Fig. 9 after step 801 where the detected signal quality is between the HIGH and ADEQUATE thresholds according to an exemplary embodiment of the invention, and

**Fig.11**     shows another flow chart of a cell (re)selections procedure according to an embodiments of the invention.

## DETAILED DESCRIPTION OF THE INVENTION

The following paragraphs will describe various embodiments of the invention. For exemplary purposes only, most of the embodiments are outlined in relation to an orthogonal single-carrier uplink radio access scheme according to 3GPP LTE (Release 8) and LTE-A (Release 10) mobile communication systems discussed in the Technical Background section above. It should be noted that the invention may be advantageously used for example in connection with a mobile communication system such as 3GPP LTE (Release 8) and LTE-A (Release 10) communication systems previously described, but the invention is not limited to its use in this particular exemplary communication network.

The explanations given in the Technical Background section above are intended to better understand the mostly 3GPP LTE (Release 8) and LTE-A (Release 10) specific exemplary embodiments described herein and should not be understood as limiting the invention to the described specific implementations of processes and functions in the mobile communication network. Please note that the invention will be described in the following mainly focusing on the relay node architecture A as known from 3GPP TR 36.806, version 2.0.0 and is applicable to all three alternatives of this architecture. Furthermore, in case of referring to the mobile terminal's mobility management entity or MME in the following, the mobility management entity terminating the mobile terminal's user plane interface in the mobile communication system is referred to. In the current 3GPP architecture, this user plane interface is the S1-U interface (see MME_UE shown in Fig. 3).

One solution to avoid the frequent tracking area procedure could be that the user equipment's mobility management entity includes the tracking area identifiers of the mobile micro cells (respectively of the mobile relay nodes controlling same) in the tracking area identifier list. Accordingly, the user equipment does not need to perform tracking area update procedure when the user equipment selects a radio cell controlled by a mobile relay node. However, this solution may be difficult to realize, as it requires that the user equipment's mobility management entity consider the tracking area identifiers of all moving micro cells when generating the tracking area identifier list. The constellation of the user equipment's "best" cell for camping may also change frequently and mobility management entity does not know the micro cells in the vicinity of the user equipment. Thus the following additional sub-problems with this solution may be identified as follows:

- The periodic tracking area update procedure can hardly be used to update the user equipment with the mobile relay node that are entering or leaving the vicinity of the user equipment because the periodic tracking area update procedure is performed too seldom.

- Having too many mobile relay nodes in the tracking area identifier list would cause overlapping paging areas because the micro cells and the macro cells have overlapping coverage.

- The user equipment should avoid to camp on a micro cell, if the user equipment is not moving together with the micro cell or located in the micro cell for a given period of time.

Because of the limited footprint (i.e. small geographic coverage) of the micro cells, minor movements of the mobile micro cells or user equipment can cause the user equipment to loose access to the micro cell/mobile communication system. Hence, the user equipment would perform an immediate and frequent cell (re)selection procedure. Furthermore, if the user equipment is camping on a micro cell of a mobile relay node, which may not be configured with information about (all) neighbor cells, and thus, the mobile relay node may not broadcast reliable information about the neighbor cells for cell (re)selection procedure within their system information. Missing appropriate information about the neighbor cells may result in scanning many frequency bands that consumes resources (time and energy) in the user equipment.

Considering the above issues, a first aspect of the invention is the provision of a cell (re)selection scheme. The proposed cell (re)selection scheme provides a mechanism to decide at a mobile terminal whether it is located (and remains located) within a micro-cell's coverage area or whether it can be expected that the mobile terminal only perceives a high signal quality from the micro cell for a short time duration. In the first case, the mobile terminal may decide to camp on the micro cell, i.e. to select the micro cell as its new serving cell, while in the latter case the mobile terminal should preferably stay camped in its current serving cell, which is typically a macro cell. Accordingly, in the first case the mobile terminal performs a tracking area update with its serving mobility management entity of the mobile communication system. This solution may for example minimize the consumption of resources in the mobile terminals and may offer maximal accessibility to the mobile communication system.

For mobile micro cells, i.e. micro cells controlled by a mobile entity such as a mobile relay node, the first aspect can be understood as to provide means for the mobile terminal to detect whether it is moving with the micro cell or not. Hence, in the first case, the mobile terminal may select the micro cell as its serving cell, while in the second case the mobile terminal should stay camped at its current serving cell.

One exemplary scenario where mobile relay nodes may provide a micro cell for access to the mobile terminal may be for example a bus or train in which a relay node (respectively, hardware providing the functionality of the relay node) is installed. While there may be micro cells available to the mobile terminal, still they may also be within the footprint of a macro cell that is providing a (significantly) larger coverage area than a micro cell. Basically, the proposed cell (re) selection scheme according to some embodiments of the invention, where mobile micro cells are provided, allows the mobile terminal to detect, whether it is moving with the micro cell or not, and if so, the mobile terminal registers its location being the micro cell using a tracking area update.

According to the first aspect of the invention, the decision whether to select a micro cell as the new serving cell is based on an evaluation of the signal quality within the micro cell and the current serving cell (e.g. a macro cell) for a given time period (threshold time period).

Based on the offset of the signal quality in the micro cell and the signal quality in the serving cell - which may be repeatedly determined by the mobile terminal - the mobile terminal decides whether to request its mobility management entity to select the micro cell as its new serving cell, e.g. by sending a tracking area update request message to the mobility management entity. The mobile terminal thereby uses two threshold values to which the offset can be compared. The first threshold value is higher than the second threshold value.

If the mobile terminal is detects that the offset between the signal quality within the micro cell and signal quality in the current serving cell is within the range defined by the first and second threshold value for a given period of time, the mobile terminal decides to select the micro cell as its new serving cell. If the signal quality within the micro cell and signal quality in the current serving cell is higher than the first threshold value, i.e. the signal quality is micro cell is significantly better than that of the serving cell, the mobile terminal may select the micro cell as the serving cell even before expiry of the threshold time period. For the exemplary scenario of a mobile micro cell, the evaluation of the offset for a given time period allows the detection of whether the mobile terminal moves with the micro cell or not.

Please also note that the order in which the threshold values are checked is a matter of design, i.e. the mobile terminal may first check the first threshold value and, if the offset is lower than same, the second threshold value, or vice versa. Furthermore, the offset between the signal quality within the micro cell and signal quality in the current serving cell may be expressed in various fashions. For example, the offset may be defined as the ratio of the two signal qualities or a difference or another value that is indicative of the relation of the signal quality in the micro cell in comparison to the serving cell.

The threshold values may be set so that the lower threshold value is indicating a signal quality offset which is the lower limit of what can be considered an adequate signal quality (relative to the current serving cell) justifying the selection of a new serving cell, if the signal quality in the candidate serving cell is equal or above this lower threshold value for a given period of time. Considering the example where the candidate serving cell is a moving micro cell (e.g. a micro cell controlled by a mobile relay node), this may be considered an indication of the mobile terminal moving with the mobile micro cell (e.g. the mobile terminal is located in a train, airplane, bus, etc. offering the micro cell). The higher one of the two threshold values may be set so that it indicates a lower limit of an excellent signal quality in the candidate serving cell (relative to the current serving cell), which may for example justify an immediate selection of the candidate serving cell as the new target cell of the mobile terminal. The two threshold values are for example configurable by the network operator: In one example, the adequate signal quality of the candidate micro cell could be double of the signal quality of the current serving cell - accordingly the offset ADEQUATE can be considered an offset factor that is 2. The high signal quality could be for example four times of the signal quality of the current serving cell - accordingly the offset HIGH can be considered an offset factor that is 4.

Furthermore, as the mobile terminal may perform multiple measurements before selecting a candidate serving cell, please note that it is assumed that the mobile terminal (temporarily) stores measurement results of the candidate serving cell and the current serving cell so as to evaluate the signal quality over a given time period. Moreover, the mobile terminal may optionally store measurement results of the signal quality in the current serving cell of the last couple of measurements in the current serving cell, so as to be for example able to detect drops in the signal quality.

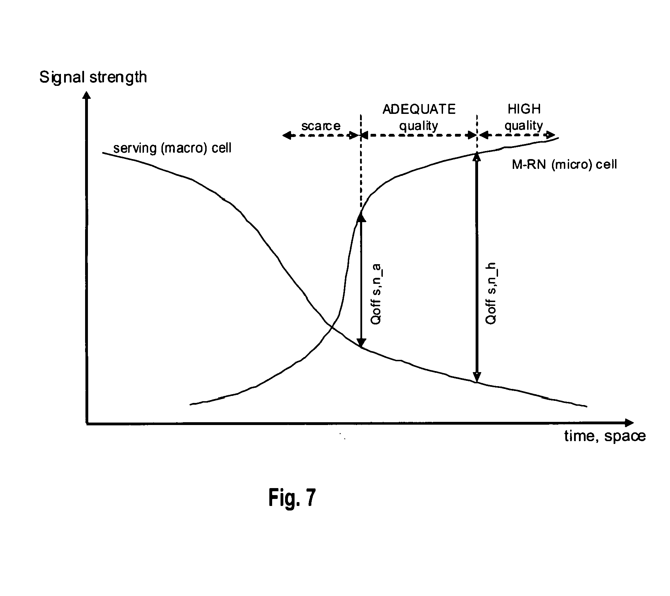

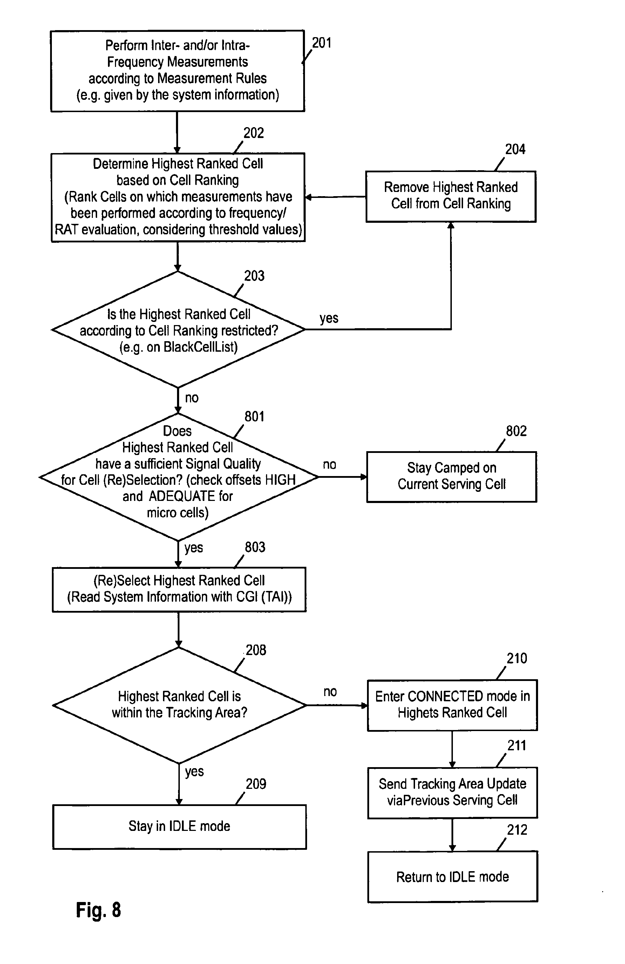

An exemplary embodiment of the invention will be described in the following in reference to Fig. 7 and Fig. 8. A mobile terminal (e.g. a user equipment) may be assumed to move within a mobile heterogeneous communication system (e.g. a 3GPP-based system comprising macro cells and micro cells). The mobile terminal is assumed to move in IDLE mode. In other words, the mobile terminal is not maintaining radio resource control signaling connection to the access network while moving in the mobile communication system.

The mobile terminal is served by a mobility management entity, MME, that is handling mobility related functions for the mobile terminal and is tracking the mobile terminal's location. For example, the mobility management entity may be a MME of a 3GPP system as has been described in the Technical Background section which is further enhanced with additional functionality as will be described in more detail below.

The mobility management entity provides tracking area information to the mobile terminal. This tracking area information is informing the mobile terminal its tracking area, i.e. is defining an area within the mobile communication system in which the mobile terminal may move without notifying its mobility management entity on its movement (when the mobile terminal moves in IDLE mode, i.e. without a radio resource control connection to the network). For example, the tracking area may be defined by means of cell identifiers that identify the radio cells (respectively, their controlling entities) that belong to the mobile terminal's tracking area. The MME may define the tracking area per mobile terminal and is thus capable of defining and assigning the mobile terminals to respective tracking areas as needed.

The tracking area information may for example comprise a lost of cell identifiers indicating one or more cells as the mobile terminal's tracking area. The cell identifiers identify the radio cells the mobile terminal is allowed to select as its serving cell without updating its location, e.g. by means of sending a tracking area update request message. The cell identifiers defining the tracking area of the mobile terminal may for example global identifiers, i.e. identifiers that are globally unique. In one exemplary implementation, the tracking area is communicated from the MME to the mobile terminal by means of a list of tracking area identifiers (TAI list).

Furthermore, in addition to the tracking area information, the mobile terminal may receive system information from a base station of the current serving cell. In one exemplary implementation, the system information comprises neighbor cell information for a cell (re)selection procedure. The neighbor cell information may for example comprise a list of cell identifiers indicating one or more cells the mobile terminal is not allowed to select as its serving cell. This list is referred to as a "blacklist" in the following and is optional. The blacklist may be defined by means of physical cell identifiers (PCIs), which have a local validity only. This means that - in contrast to the cell identifiers defining the tracking area - the blacklist contains cell identifiers that are only valid within a limited area of the mobile communication system.

The neighbor cell information may indicate intra-frequency or inter-frequency cells (e.g. by respective list of cell identifiers (e.g. physical cell identifiers) that indicate neighboring radio cells operating within the same frequency bands (intra-frequency cell list) or on different frequency bands (inter-frequency cell list). Optionally, the system information may also indicate the absolute priority of neighbor cell frequency bands (in case neighboring cells are operated on different frequency band(s) than the serving cell) which is indicating the order of the frequency bands in which the mobile terminal is to scan the neighboring cells when performing a cell (re)selection procedure.

Another parameter that may be comprised in the system information is the signal strength offsets (HIGH and ADEQUATE) between two cells that are to be used in the cell (re)selection procedure as will be described in more detail below.

When a cell (re)selection procedure is triggered, the mobile terminal scans 701 a frequency band (e.g. the highest priority frequency band according to the system information) for broadcast signals (e.g. pilot signals) of other cells and stores the signal quality measured for the respective detected cells. The nodes controlling the cells (e.g. eNodeB, relay node and/or Home eNodeB) include a cell identifier in the broadcast signals within their cells, so that the mobile terminal can obtain their respective cell identifiers when scanning the frequency band. The cell identifiers may be for example physical cell identifiers (PCIs). The mobile terminal stores these cell identifiers along with the measured signal quality in the respective cell.

If there is more than one cell detected in the scanning of the frequency band, the mobile terminal ranks 202 the cells. This ranking may be for example based on parameters broadcast in the system information within the current serving cell. The steps 201 and 202 of Fig. 8 may for example implemented as described in 3GPP TS 36.304, section 5.2 and as briefly described with respect to Fig. 2 above. For the ranking of the measured cells the user equipment considers the signal strength of the current serving cell, which is measured shortly before or after performing the scanning procedure 201.

In the embodiment highlighted in Fig. 8, it is assumed that the blacklist (BlackCellList) is only listing forbidden macro cells, but that micro cells are not listed in the lack list. Please note that the use of a blacklist is optional in this embodiment, and if same is not provided, steps 203 and 204 are not necessary. Assuming that a blacklist is configured, and having ranked 202 the cells found in the scanning procedure 201, the mobile terminal selects the highest ranked cell and checks 203, whether same is on the blacklist. In this example, this means that in case a macro cell is selected, which is on the blacklist, the mobile terminal removes 204 this highest ranked (macro) cell from the ranking of the cells found in the scan, and selects the next lower ranked cell in step 202 and again proceeds to step 203 to determine whether the now highest ranked cell is on the blacklist. This procedure is repeated until the mobile terminal finds a cell that is not on the blacklist. If multiple cells are found during the scanning of a single frequency band, and the highest ranked cell is forbidden, the mobile terminal may choose to evaluate the second best cell from the same frequency band, only if the IFRI bit is set as described above. If no cells are left in the cell ranking, the mobile terminal may scan another frequency band for candidate serving cells, i.e. returns to step 201, this time scanning another frequency band. If there are no cells found the mobile terminal remains camping 802 on the current serving cell.

Given that the mobile terminal has chosen a highest ranked cell that is not on the blacklist, the mobile terminal next determines 801 whether the highest ranked cell is providing a sufficient signal quality (in comparison to the current serving cell) to qualify for selection as the new serving cell of the mobile terminal.

In case the highest ranked cell is a macro cell, the same procedures as described in 3GPP TS 36.304, section 5.2 and as briefly described with respect to Fig. 2 above may be used for steps 203 and 801. Alternatively, the also in this case the mobile terminal may use the procedure described below for a micro cell in order to determine whether the macro cell is selected as the new serving cell.

In this respect please note that the mobile terminal may be capable of distinguishing macro cells and micro cells. For example, one option is that the cell identifiers of macro cells and micro cells that are detected in the scanning procedure of step 201 can be distinguished by the mobile terminal. One option would be that the macro cells are assigned physical cell identifiers within a first range of identifiers, while the physical cell identifiers of the micro cells are within a second distinct range of cell identifiers. Furthermore, another option is that the system information read in step 803 allows the mobile terminal to distinguish macro cells and micro cells. For example, the system information could comprise a cell type information (e.g. a flag or field of more than one bit) within the system information that indicates, whether the cell is a macro cell or a micro cell.

Optionally, in both options, not only macro cells and micro cells may be distinguished, but also macro cells, stationary micro cells and mobile micro cells may be distinguished by means of their physical cell identifiers, respectively by some cell type information in the system information.

Assuming that the highest ranked cell is a micro cell, the determination in step 801 to decide whether this micro cell qualifies as a serving cell may be implemented as follows. For example in contrast to the procedures described in 3GPP TS 36.304, section 5.2, the mobile terminal uses two different offsets (threshold values) for the evaluation of the signal quality within the micro cell - these offsets will be referred as ADEQUATE and HIGH in the following, where the offset HIGH is larger than he offset ADEQUATE.

This procedure will be highlighted with reference to Fig. 7 in the following. Fig. 7 shows the signal quality of the current serving cell (serving (macro) cell) and the candidate micro cell of a mobile relay node (M-RN micro cell), wherein the x-axis indicates the time and the y-axis indicated the signal quality. As can be seen in Fig. 7 - for exemplary purposes - it may be considered that the signal quality of the serving cell degrades in comparison to the micro cell over time. The thresholds ADEQUATE and HIGH are indicated as $Qoff\ s,n\_a$ and $Qoff\ s,n\_h.$ Note that the point in time of measurement and/or the location of the mobile terminal is also effecting the measurement in Fig. 7, because the received signal strength of the neighbor cell depends on the distance of the mobile terminal from the mobile relay node. At the point in time and the location when the mobile terminal performs scanning/measurement of the signal strengths of the mobile relay node-controlled cell and the serving cell, the mobile terminal determines in which quality range the measured mobile relay node signal belongs depending on the pre-defined thresholds HIGH $(Qoff\ s,n\_h)$ and ADEQUATE $(Qoff\ s, n\_a)$.

The pre-defined thresholds HIGH and ADEQUATE may be for example defined relative to the thresholds used for the cell ranking in step 202 and my be thus configured according to the system information broadcasted in the current serving cell. In one exemplary embodiment of the invention, the offset ADEQUATE $(Qoff\ s,n\_a)$ could be equal to the parameter $Qoff\ s,n$ as used in the cell ranking procedure according to 3GPP TS 36.304, section 5.2, while the offset HIGH $(Qoff\ s,n\_a)$ could be equal to two, three or four times the parameter $Qoff\ s,n$.

In the determination of whether the micro cell should become the new serving cell the mobile terminal evaluates the offset between the signal quality of the micro cell and the signal quality of the current serving cell relative to the threshold offsets ADEQUATE and HIGH. The determination in step 801 is affirmative (yes), if one of the following conditions is fulfilled:

- The offset between the signal quality of the micro cell and the signal quality of the current serving cell is equal or larger than the threshold ADEQUATE, but lower than the threshold HIGH for a threshold time period $T\_adequate.$
- The offset between the signal quality of the micro cell and the signal quality of the current serving cell is equal or higher than the threshold HIGH for a threshold time period $T\_high.$

Please note that condition a) implies that the mobile terminal repeatedly measures the signal quality of the micro cell and the serving cell and evaluates their offset relative to the thresholds ADAQUATE and HIGH. For example, the mobile terminal may perform a measurement of the signal quality every *m_adequate* seconds during the threshold time period *T_adequate.* The periodicity of the measurement as given by the parameter *m* should be apparently smaller than the threshold time period *T_adequate* to ensure multiple measurements.

In one implementation example, the threshold time period *T_ adequate* may be for example a value between 30 seconds and 90 seconds, e.g. 60 seconds, and the mobile terminal performs 3 to 9, e.g. 6 measurements in this time period (i.e. *m_adequate =10 seconds).* This implementation is however only an exemplary and may apply to a scenario, where the user of the mobile terminal is on the platform of a underground station, where trains (i.e. micro cells) may be assumed to stop for approximately 60 to 90 seconds, before they leave the station again.

Also for evaluating to condition b), the mobile terminal may repeatedly measure the signal quality of the micro cell and the serving cell and evaluates their offset relative to the threshold HIGH. For example, the mobile terminal may perform a measurement of the signal quality every *m_high* seconds during the threshold time period *T_high.* The periodicity of the measurement as given by the parameter *m m_high* should be again smaller than the threshold time period *T_high* to ensure multiple measurements. Alternatively, the threshold time period *T_high* may also be not used (e.g. set to zero) such that the mobile terminal will only use one single measurement to decide on the selection of the micro cell as the new serving cell, if the signal quality is sufficiently high, i.e. exceeding or equal to the offset HIGH.

In one exemplary implementation, the threshold time period *T_high* is smaller than the threshold time period *T_adequate.* The measurement periodicities m_adequate and *m_high* may be equal or different from each other.

In case step 801 is affirmative (yes), the mobile terminal proceeds to step 803, where it selects the micro cell as the new serving cell and reads the system information of the micro cell. This may include the mobile terminal determining a globally valid cell identifier of the micro cell from the system information. This cell identifier may be for example the CGI (TAI). In case step 801 is not affirmative (no), the mobile terminal may stay camped 802 on the current serving cell.

In case the mobile terminal has selected 803 the micro cell as its new serving cell and having obtained the micro cell's cell identifier from the system information, the mobile terminal next determines 208 whether the selected cell is within the tracking area configured by the MME. (Please note that steps 803, and 208 to 212 apply to all selected cells, i.e. not only to the selection of micro cells.)

In one exemplary implementation, it is assumed that the MME only includes macro cells to the tracking area of the mobile terminal. If the selected cell is a macro cell within the mobile terminal's tracking area, the mobile terminal does not need to send a tracking area update, but may stay 209 in IDLE mode. However, if the mobile terminal selects a micro cell as the new serving cell, the micro cell will not be within the mobile terminal's tracking area, and the determination of step 208 is thus negative (no) - this of course applies also to macro cells selected as the serving cell but not being within the mobile terminal's tracking area.

Accordingly, if the selected (micro) cell is not in the mobile terminal's tracking area, the mobile terminal changes 210 to CONNECTED state in the new serving cell (i.e. established a control signaling bearer), to signal 211 a tracking area update to the MME containing the cell identifier of the (micro) cell as obtained from the system information. Please note that although the steps 210 and 211 are shown in distinct steps, however, they may also be considered essentially to form one step. CONNECTED state is entered by the mobile terminal, when the mobile terminal has generated the tracking area request message in its non-access stratum layer and the access stratum needs to transmit the message over the radio interface. In other words the tracking area update request message triggers the access stratum to transfer from IDLE to CONNECTED state, i.e. to establish a RRC connection in the highest ranked cell to transmit the tracking area update request message in. The MME may accept the cell (re)selection of the mobile terminal and updates the mobile terminal's location in its context information maintained for the mobile terminal. The MME may send an accept message to the mobile terminal to confirm the tracking area update. After having finished the tracking area update, the mobile terminal returns 212 to IDLE mode.

Please note that instead of using the new serving cell, the tracking area update procedure may be also performed via the "previous serving cell", i.e. all signaling messages of the tracking area update procedure may be sent through the previous serving cell of the mobile terminal prior to the selection of the new serving cell in step 803. Assuming the exemplary scenario of Fig. 6 this means that the UE will signal the tracking area update request message to the MME through the macro cell of the DeNodeB, when selecting one of the micro cells controlled by a Mobile RN as the new serving cell.

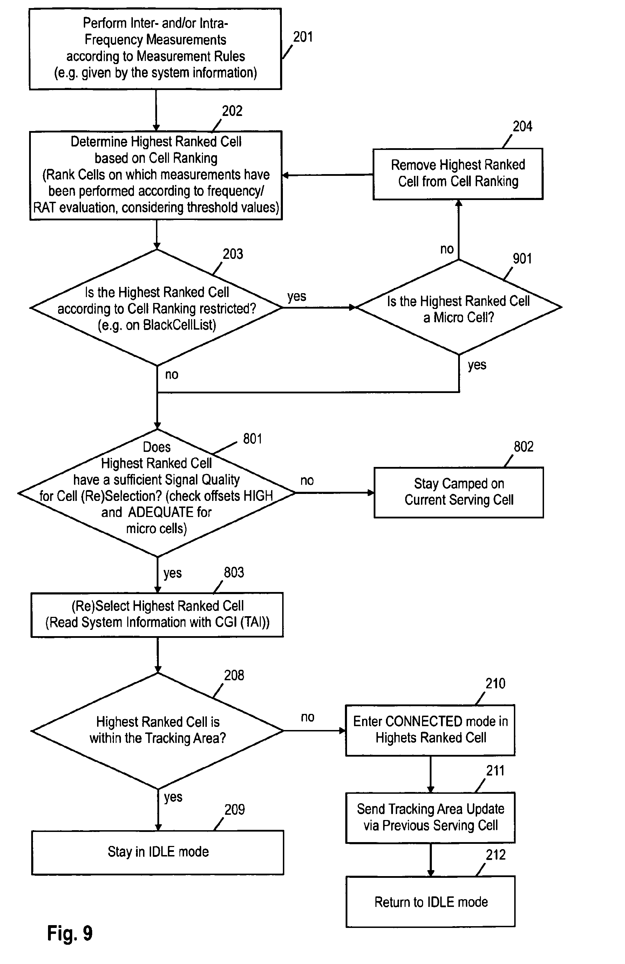

In the exemplary cell (re)selection procedure outlined with respect to Fig. 8 above, it has been assumed that the micro cells are not listed in the blacklist, respectively, that no blacklist is used. In another embodiment, the blacklist may contain also cell identifiers of micro cell. It may be desirable for network operators to list micro cells in the blacklist, as this would allow the network operator to prevent or at least control the number of mobile terminals camping on micro cells and can be assumed to perform frequent location updates. In case micro cells can be listed in the blacklist, a modified cell (re)selection procedure as shown in Fig. 9 may be used. The steps of this procedure are almost identical to the procedure in Fig. 8. However, in case micro cells are on the blacklist, using the procedure of Fig. 8, the mobile terminal would remove the micro cell from the cell ranking, thereby making it impossible to select a micro cell on the blacklist.

In the flow chart shown in Fig. 9, a step 901 is introduced that - prior to removing 204 a restricted highest ranked cell from the cell ranking - checks whether the as such restricted highest ranked cell is a micro cell. If this is the case (yes), the mobile terminal nevertheless determines whether the micro cell is qualifying as a serving cell and if so selects the micro serving cell as its new serving cell. Otherwise, if the highest ranked cell is not a micro cell, the highest ranked cell is removed 204 from the cell ranking as in Fig. 8.

In the exemplary procedures of Fig. 8 and Fig. 9, it has been also assumed that the tracking area of the mobile terminal does not comprise any micro cells. In one further exemplary embodiment, the tracking area of the mobile terminal does not comprise any micro cells controlled by mobile relay nodes (i.e. mobile micro cells). Otherwise the cell (re) selection procedure is unchanged, except for this implementation enabling the selection of for example a micro cell of a stationary relay node as a serving cell, similar to the selection of a macro cell.

According to the embodiments described above, the mobile terminal sends a tracking area update request message to its mobility management entity to indicate that it is wishing to select the micro cell as its new serving cell. The tracking area update request message sent by the mobile terminal comprises an identifier of the micro cell, e.g. the TAI or PCI of the cell. Please note that the tracking area may be sent by the mobile terminal as a regular, periodic tracking area update or in response to the cell (re)selection criteria triggering a change of the serving cell.

Whether a mobile terminal is sending a periodic or non-periodic tracking area update to indicate its wish to camp on target micro cell to the mobility management entity may for example depend on the signal quality offset between the current serving cell and the neighboring cell (i.e. the micro cell in this example). For example, in case the mobile terminal determines that the signal quality offset HIGH is exceeded, an immediate, non-periodic tracking area update may be sent by the mobile terminal, while in case the mobile terminal determines that the signal quality offset is between offset HIGH and the offset ADEQUATE, the mobile terminal sends a periodic tracking area update. In any case, if the mobility management entity confirms the serving cell (re)selection in response to a tracking area update, the mobile terminal select the micro cell as its new cell.

Another possibility is that the mobile terminal sends the tracking area update request message as a part of the periodic tracking area update procedure (i.e. wait until the next scheduled periodic tracking area update) or non-periodic tracking area update procedure (the tracking area update request message is sent proactively) depending on the mobility state (*normal, medium* or *high)* of the mobile terminal. 3GPP TS 36.304 specifies that the user equipment may be in one of three different mobility states: normal-mobility state, medium-mobility state and high-mobility state. The mobile terminal determines its mobility state according to the number of cell (re)selections performed during a given time period. The parameters for determining the mobility state (e.g. number of cell reselections, given time period) can be sent in the system information broadcast of the serving cell.

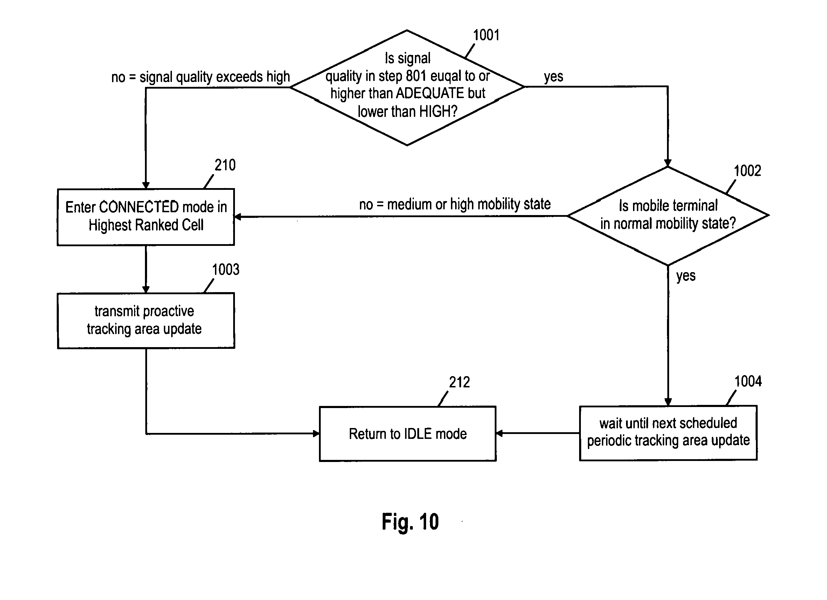

For example, Fig. 10 shows an alternative exemplary implementation for Fig. 8 and Fig. 9 where the mobility state of the mobile terminal is taken into consideration. More specifically the mobility state is taken into consideration when the mobile terminal decides whether to send the tracking area update request message to the mobility management entity sooner or later. Steps 210 and 212 remain unchanged. Fig. 10 represents the procedure for the case when the signal quality is better than offset ADEQUATE but less than offset HIGH when performing step 801 (Fig. 8). The mobile terminal determines 1001 whether the offset between the signal quality of the candidate cell (highest ranked cell) and the serving cell is between the offset ADEQUATE and offset HIGH. In case the check of step 1001 is positive (yes), the mobile terminal acts depending on its mobility state as shown in step 1002. The mobile terminal checks 1002, where the mobile terminal in normal mobility state. If the check 1002 is negative (no), i.e. the mobile terminal is in medium or high mobility state, the mobile terminal may immediately send 1003 a tracking area update (proactive tracking area update) upon having entered 210 CONNECTED state. In case the check 1002 is affirmative (yes), i.e. the mobile terminal is in a normal mobility state, the mobile terminal wait 1004 until the next scheduled periodic tracking area update to inform the MME on its selection of a new serving cell.

Moreover, the mobility state of the mobile terminal may be optionally also considered in the ranking of the cells in step 202. For example, in one exemplary embodiment of the invention, if the mobile terminal is in a normal-mobility state, the parameters for cell reselection (e.g. offsets ADEQUATE and HIGH) are not scaled. For example, if these parameters are advertised in the system information of the current serving cell (macro cell), same are used as signaled in the system information. However, if the mobile terminal is in the medium-mobility state or in high-mobility state the parameters for cell reselection (e.g. offsets ADEQUATE and HIGH) are scaled with a speed dependent scaling factor *(ScalingFactor),* which may be for example also signaled as part of the system information. For example, the signal strength thresholds ADEQUATE and HIGH may be reduced when the mobile terminal is in medium-mobility state or in high-mobility state.

For example the signal strength thresholds ADEQUATE and HIGH for cell (re)selection may be reduced by a scaling factor having a value of -2dB, -4dB or -6dB depending on the mobile terminal's speed. Further in medium-mobility state or in high-mobility state, the measurements for cell (re)selection (see step 801) may be for example performed more frequent, i.e. the timer for scheduling the cell (re)selection procedure (and thus the measurements) is reduced with a speed-depended scaling factor *(SpeedScalingFactor)* having a value between 0 and 1 (e.g. 0.25, 0.5 or 0.75).

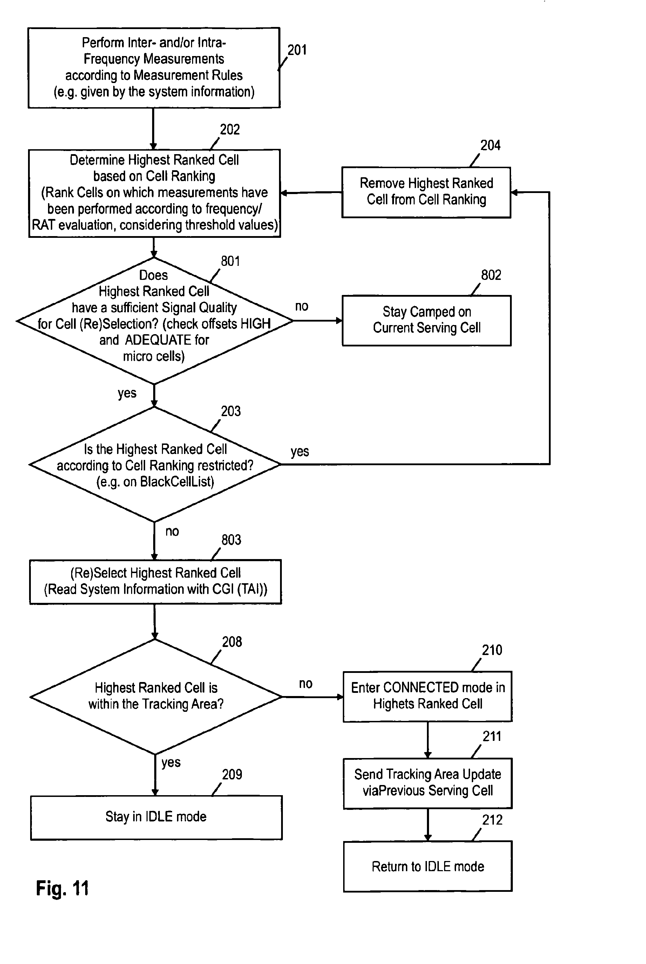

Furthermore, it should also be noted that the sequence of steps as shown in Fig. 8 and Fig. 9 may also be changed. For example, as shown in Fig. 11, the step 801 could also be performed before step 203. Essentially, the blacklist would then be checked for a cell that is highest ranked and qualifies for becoming the new serving cell. Optionally, steps 202 and 801 may also be combined to form a single step.

In the exemplary cell (re) selection procedure above, there are different options how to configure the tracking area of the mobile terminals and how to communicate the optional blacklist of forbidden cells to the mobile terminals. For example, in one embodiment of the invention, the mobility management entity may initially configure the mobile terminal's tracking area such that it only comprises macro cells neighboring the current serving cell of the mobile terminal. These macro cells can be considered stationary and controlled by respective base stations (eNodeBs). Furthermore, in this exemplary embodiment, the tracking area notified to the mobile terminal may optionally further comprise micro cells controlled by stationary relay nodes. If a blacklist of forbidden cells is provided in the current serving cell, it may be further assumed that the micro cell to be selected by the mobile terminal is not listed therein.

In case the mobile terminal wishes to camp on a micro cell that is not in the tracking area, it needs to therefore send a tracking area update as mentioned above. The mobility management entity may decide whether to allow the mobile terminal selecting the micro cell indicated in the tracking area update as the new serving cell by responding with a tracking area update accept message, respectively, denies the change of the serving cell by responding with a tracking area update reject message. If (mobile) micro cells are listed in the blacklist, the transmission of the tracking area update for selection of a (mobile) micro cell allows the MME controlling the access of the mobile terminals to the (mobile) micro cells. This may be for example of interest in scenarios, where the micro cells offer special services for which the mobile terminals need a special subscription. When receiving the tracking area update for such micro cell, the MME may decide based on the mobile terminal's subscription, whether to grant access to the micro cell and allow the mobile terminal camping therein.

When sending a tracking area update accept message to the mobile terminal, the MME also indicates an updated tracking area to the mobile terminal by including a list of cell identifiers that define the updated tracking area of the mobile terminal. In one implementation, the MME only indicates the cell identifier of the micro cell the mobile terminal as the new tracking area. This implementation may for example be advantageous when the MME concludes (e.g. based on the CGI (TAI) signaled by the mobile terminal in the tracking area update request message) that the user equipment moves together with the mobile relay node and can travel a long distance, e.g. when the mobile relay node is a long distance train, and the MME doesn't know where the user equipment is going to leave the train. When the user equipment reselects another cell, e.g. after getting off the train, the user equipment would immediately perform tracking area update procedure because no other tracking area identifier except the mobile relay node's tracking area identifier is included in the tracking area identifier list.

Alternatively, the MME may include the cell identifier of the micro cell to the tracking area together with other cell identifiers of neighboring (macro) cells. This may be for example a useful option, if the MME knows that the mobile relay node is a city bus (i.e. the bus doesn't travel long distances), the MME may also include the tracking area identifiers of the surrounding macro cells, so that the user equipment doesn't need to perform tracking area update procedure when getting off the bus. To summarize, the MME may decide how to compile the user equipment's tracking area identifier list based on the type of mobile relay node and the distance it may travel.

As indicated above, the MME may be aware of the type of mobile relay node based on the CGI (TAI) signaled by the mobile node in the tracking area update. For example, the CGIs (TAIs) of mobile micro cells may be associated to movement information that may for example indicate the movement pattern and/or traversed cells that allow the MME to return an optimized tracking area definition to the mobile terminal.

In another exemplary embodiment, as indicated above, the micro cells of mobile relay nodes may be listed in a blacklist that is signaled within the system information of the mobile terminal's current serving cell (and optionally further non-micro cells). As discussed with respect to Fig. 9 above, the mobile terminal nevertheless considers the micro cells within the black list in its cell (re)selection procedure, i.e. is measuring the signal quality of the micro cells. Furthermore, in case the mobile terminal finds that the signal quality in a micro cell is good enough to select the micro cell as its new serving cell, the mobile terminal also reads the system information from the micro cell.

Once the mobile terminal has obtained the globally unique identifier (CGI, respectively TAI) of the new serving cell the mobile terminal can send the tracking area update for the micro cell to its MME. The mobility management entity may decide whether to allow the mobile terminal selecting the micro cell indicated in the tracking area update as the new serving cell by responding with a tracking area update accept message, respectively, denies the change of the serving cell by responding with a tracking area update reject message. As outlined before, when sending a tracking area update accept message to the mobile terminal, the MME also indicates an updated tracking area to the mobile terminal by including a list of cell identifiers that define the updated tracking area of the mobile terminal. In one implementation, the MME only indicates the cell identifier of the micro cell the mobile terminal as the new tracking area. Alternatively, the MME may include the cell identifier of the micro cell to the tracking area together with other cell identifiers of neighboring cells.

A further exemplary embodiment is relating to another possibility to allow the mobile terminal detecting that it is moving with a mobile micro cell. This exemplary implementation is based on the assumption that for example in a train, the signal quality of the current serving cell (macro cell) of the mobile terminal should drop due to shielding effects of the train, once the user carrying the mobile terminal enters the train. Simultaneously, the signal quality of the micro cell offered within the train should improve. If this drop of the signal quality of the macro cell (serving cell) is ongoing, while the signal quality of the micro cell is staying at a high level (at least equal to the threshold value ADEQUATE), the mobile terminal may conclude that it is now within the micro cell and moving with it, so that it may select the micro cell as the new serving cell, if the signal quality qualifies the micro cell as a serving cell. Hence, in this embodiment, the mobile terminal may for example detect that it is moving with the micro cell and may select the micro cell as the new serving cell, in case:

- the signal quality within the micro cell is approximately constant within a threshold time period, and

- the signal quality within the macro cell is deteriorating within threshold time period.

In the following, further improvements to the cell (re)selection procedures according to the different embodiments described herein will be outlined with focus to the mobile terminal (user equipment) selecting a mobile micro cell, i.e. a micro cell controlled by a mobile relay node (M-RN). Furthermore, system configuration options and their impacts on the cell (re)selection of the mobile terminals are discussed. The explanations below are exemplarily considering a 3GPP based mobile communication system, such as 3GPP LTE or LTE-Advanced.

It may be assumed that the user equipment's MME does not consider the mobile relay nodes when configuring the user equipment's tracking area, i.e. generating the user equipment's tracking area identifier list. The reason for this assumption is that the MME may not know the locations of the mobile relay nodes and a lot of signaling in the core network is required to keep all MMEs (serving any possible user equipment) up-to-date about the current location of the mobile relay nodes. Since the tracking area identifier of the mobile relay node's cell is not included in the tracking area identifier list, the user equipment should avoid camping on a cell controlled by a mobile relay node in order to prevent the execution of the tracking area update procedure for registering in the tracking area identifier of the cell controlled by the mobile relay node at the MME.

As already indicated above, one possible solution may be would be to generally forbid the user equipment to camp on cells controlled by mobile relay nodes in IDLE mobility. This could be achieved, if the user equipment can somehow detect that the measured neighbor cell is controlled by mobile relay node, as already described above, or if the serving (macro) cell includes the mobile relay node's physical cell identifier in the *BlackCellList.* The problem however is that the user equipment would never camp on an mobile relay node's cell even if the user equipment is travelling for hours together with the mobile relay node. The user equipment would continue to reselect macro cells for camping, perform possible tracking area update procedure and consume battery power. Having said the above, the narrowed scope of the problem desirable to solve is to find the optimal conditions, under which the user equipment can reselect a mobile relay node cell only when it is necessary, e.g. when the user equipment travels together with the mobile relay node cell.

The criteria for cell (re)selection to a usual macro cell and the criteria for cell (re)selection to a mobile relay node's cell may be different. For example, the improved cell (re)selection procedures using two thresholds described with respect to Fig. 8 and Fig. 9 may be used for the selection of micro cells, while macro cells may be selected according to the criteria as known for example from 3GPP TS. 36.304, section 5.2.

Besides an explicit indication of a cell being a micro cell by means of the PCI broadcast within the cell or including a cell type information to the system information providing within the cells, the user equipment may also learn that a measured/scanned cell is a mobile relay node-controlled cell using one of the following scenarios that show examples for the network configurations.

Scenario A: The DeNodeB is unmodified and a pre-configuration in the user equipment is used. This scenario is for example compliant with Alt. 1 of Architecture A discussed in 3GPP TR 36.806.

Two sub-scenarios (or configurations) may be possible in scenario A:

Scenario A.1: The mobile relay node-controlled cells are configured to operate in a special reserved frequency band (s) not used by the macro cells. The DeNodeB doesn't include the mobile relay nodes' frequency bands in the advertised system information (SIB). The user equipments are pre-configured with the mobile relay node frequency band(s) and scan this frequency band(s) when performing cell (re)selection procedure by default. Basically, the same procedures as discussed with respect to Fig. 8 and 9 may be used, with the difference that in step 201, the pre-configured frequency band(s) of the mobile relay nodes are scanned, e.g. in addition to the highest priority frequency band.

Scenario A.2: The mobile relay nodes' cells are configured to operate in frequency bands as the macro cells, but the mobile relay nodes advertise a special indication that it is a mobile RN cell. For example the special indicator could be in the physical broadcasted signal or a new indication in the system information SIB. The user equipment should be able to read this indication in step 803 as of Fig. 8 and Fig. 9. This scenario is in line with the cell (re) selection procedures described with Fig. 8 and Fig. 9 above.

Scenario B: In this scenario the (D)eNodeB is modified (i.e. specially configured) and no pre-configuration in the user equipments is used. The special settings of system information parameters broadcast by the (D)eNodeBs and that are related to cell (re)selection procedure are used to instruct the user equipments how to behave during cell (re)selection. Depending on which system information parameters are used, different behaviors of the user equipments may be achieved:

Scenario B.1: In this scenario the *BlackCellList* is used to control the user equipments' behavior. The (D)eNodeBs (and optionally also the stationary RNs) are assumed to know, if a mobile relay node is connected to them. The DeNodeB advertises the mobile relay nodes' frequency band(s) with high priority *(cellReselectionPriority)* in the system information. Simultaneously, the DeNodeB includes the PCI(s) of the connected to it in the *BlackCellList* in the broadcasted in the system information. Note that for a conventional cell (re)selection procedure it does not make sense to define a high priority frequency band for a cell whose PCI is included in the *BlackCellList.* However, for the purposes of the invention this particular configuration can be applied to make the user equipment aware about the mobile relay node cells, but also forbid the user equipment to camp on it without the MME accepting the mobile micro cells as the new serving cell of the user equipment. The DeNodeB updates its system information when a mobile relay node enters or leaves the DeNodeB macro cell. The mobile relay node sets the IFRI-bit = 1 to ensure that in case the mobile relay node's cell is not allowed for camping and in case there are other (e.g. macro) cells suitable for camping in the same frequency band, the user equipment can choose the other cell for camping. The PCI(s) of the mobile relay node(s) should not overlap with the PCI(s) of the macro cell(s).

This configuration may for example be used in the cell (re)selection procedure of Fig. 9 (but may also be used in the procedure of Fig. 8, if the mobile terminal can distinguish mobile micro cells and non-mobile micro cells). Essentially, setting the mobile relay nodes' frequency band(s) with high priority would result in one of the frequency bands being scanned e.g. in the first scan of the mobile terminal in step 201.

Scenario B.2: Another alternative scenario is that the (D)eNodeB sets the mobile relay nodes' frequency band priority *(cellReselectionPriority)* and the neighbor cell offset *(Qoff s,n)* to a high value. The user equipment would thus scan the mobile relay node frequency band, but would rank the mobile micro cell(s) of mobile relay node(s) lower than non-mobile micro cells because *Qoff s,n* having a high value (note that the *Qoff s,n* is negative, i.e. high value means high negative value, e.g. - 20dB is higher than -10dB). This configuration of the parameters relevant to the cell (re) selection allows the DeNodeB, respectively the network operator, to control the selection of mobile micro cells as serving cells, while still ensuring that the mobile terminal is still able to select a mobile micro cell for camping.

Irrespective of which scenario is used, after the user equipment detects that the scanned candidate cell for camping is a mobile relay node's cell, uses the two offsets ADEQUATE and HIGH for selecting or not selecting the cell of the mobile relay node as its serving cell as has been outlined above.

As mentioned above, in case the user equipment decided to camp in a new cell, e.g. a mobile micro cell, the user equipment determines the signal quality of the cell controlled by the mobile relay node relative to the signal of the current serving cell. Based on the signal strength measured from the candidate mobile relay node cell the user equipment calculates the ranking of the mobile relay node cell, i.e. whether the mobile relay node cell quality is HIGH, ADEQUATE or scarce, as has been explained with respect to Fig. 7. At the time point and the location when the user equipment performance scanning/measurement of the signal strengths of the mobile relay node cell and the serving cell, the user equipment determines in which quality range the measured mobile relay node signal belongs depending on the predefined thresholds HIGH *(Qoff s,n_h)* and ADEQUATE *(Qoff s,n_a).*

In one further embodiment, the evaluation of the signal quality in step 801 of Fig. 8, Fig. 9 of Fig. 11 makes use of the following equations to determine, whether the signal quality in the highest ranked (micro) cell is sufficient to select same as the new serving:

- If the offset between the signal quality in the micro cell controlled by the mobile relay node and the signal quality in the serving cell is equal or larger than the threshold HIGH for the threshold time period T_high:

$$Qmeas,n \geq Qmeas,s + Qoff\ s,n\_h \qquad (Equation\ 3)$$

- If the offset between the signal quality in the micro cell controlled by the mobile relay node and the signal quality in the serving cell is equal or larger than the threshold ADEQUATE but lower than the threshold HIGH for the threshold time period T_adequate:

$$Qmeas,s + Qoff\ s,n\_h \geq Qmeas,n \geq Qmeas,s + Qoff\ s,n\_a \qquad (Equation\ 4)$$

where the *Omeas,n* is the signal of the neighbor cell controlled by the mobile relay node (for which the quality range has to be determined), *Qmeas,s* is the signal of the serving cell, *Qoff s,n_h* is a pre-defined threshold value HIGH, and *Qoff s,n_a* is the pre-defined threshold value ADEQUATE.

A further embodiment of the invention is related to an optimization of the user equipment to detect that it moves together with a mobile micro cell, respectively mobile relay node. The user equipment may for example monitor and store the signal strengths of the current serving and the scanned neighbor cells during the measurements 201 in the cell (re)selection procedure. If the signal strengths of the serving or neighbor cells change, the user equipment can conclude that it moves (the moving may not require cell (re)selection, i.e. the moving is within the serving cell). If the user equipment determines that the signal strength of a particular neighbor cell is constant, whereas the signal strengths of the other cells (other neighbor cells and serving cell) are changing, the user equipment may conclude that the particular neighbor cell is a mobile cell, respectively is controlled by a mobile relay node cell and that the user equipment moves together with this mobile micro cell.

One further optional improvement is that the user equipment starts scanning more frequent than the usual schedule for the cell (re)selection procedure in the frequency bands of the serving macro cell and of the detected micro cell. The purpose of the more frequent scanning is to confirm that the signal strength of the mobile relay node-controlled micro cell does not change (or at least the changes are minimal) and the signal strength of the serving cell changes. If the mobile terminal detects (e.g. for the first time during a signal quality measurement) that the signal quality offset between the micro cell and the serving macro cell is equal or larger than offset ADEQUATE, the mobile terminal may increase the frequency of the signal quality measurements for cell (re)selection for the candidate micro cell. This way the user equipment can determine faster that it (still) moves together with the micro cell, and that a cell (re)selection procedure is to be performed.

Note that the frequency of performing measurements for cell (re)selection may depend on the mobility state of the mobile terminal. For example when the mobile terminal is in high mobility state, the mobile terminal measures the for cell (re)selection more frequent than the case where the mobile terminal is in normal mobility state (please refer to the *SpeedScalingFactor* described above). Additionally to the more frequent measurements based on the mobility state or alternatively thereto, the mobile terminal may perform the signal quality measurements even more frequent if the mobile terminal wants to detect the movement together with the micro cell.

The scenarios discussed previously herein all related to an optimized cell (re)selection that is particularly addressing technical problems related to the selection of mobile micro cells as a serving cell. Another scenario considered in the following is the initial attach of the user equipment to the mobile communication system (or to be more precise to the radio access network thereof). During the initial attach the user equipment is switched on or hands over from another radio access network. During scanning for initial attach procedure the user equipment scans macro cells and micro cells. The user equipment may decide to attach to either a macro cell or to micro cell to perform the non-access stratum initial attach message exchange. Depending on the network configuration, the user equipment may be able to detect that the micro cell is a Home eNodeB, a stationary relay node or a mobile relay node.

There may also be a pre-configuration in the user equipment, whether the initial attach procedure is to be performed via a macro cell or via a micro cell, or whether performing the initial attach procedure via a mobile relay node is allowed. One possible problem when performing the initial attach procedure over the mobile relay node is that the user equipment's MME may not know the location of the mobile relay node, and thus, it may be difficult for the MME to generate the tracking area identifier list for the user equipment. Therefore, it may be less complicated if the user equipment performs the initial attach procedure via a macro cell (eNodeB), even if an mobile relay node cell is available and would offer a better signal quality.

However, if pre-configuration allows the user equipment to perform an initial attach procedure via mobile micro cells, and if the user equipment decides to attach to the mobile micro cell, the user equipment may include the macro cells (DeNodeB) identifier (PCI or CGI) in the initial attach request message sent via the mobile relay node of the micro cell to inform the MME about the location of mobile relay node. The initial attach request message may include the eNodeB's cell identifier (PCI, CGI or TAI). The MME can then use the eNodeB's cell identifier to calculate a tracking area identifier list for the user equipment and can send a properly compiled list back to the user equipment when responding to the initial attach message.

Further, the various embodiments of the invention may also be implemented by means of software modules, which are executed by a processor or directly in hardware. Also a combination of software modules and a hardware implementation may be possible. The software modules may be stored on any kind of computer-readable storage media, for example RAM, EPROM, EEPROM, flash memory, registers, hard disks, CD-ROM, DVD, etc.

Most of the embodiments have been outlined in relation to a 3GPP-based architecture of a communication system and the terminology used in the previous sections mainly relates to the 3GPP terminology. However, the terminology and the description of the various embodiments with respect to 3GPP-based architectures are not intended to limit the principles and ideas of the inventions to such systems only.

Also the detailed explanations given in the Technical Background section above are intended to better understand the mostly 3GPP specific exemplary embodiments described herein and should not be understood as limiting the invention to the described specific implementations of processes and functions in the mobile communication network. Nevertheless, the concepts and sub-frame structures proposed herein may be readily applied in the architectures described in the Technical Background section. Furthermore, the concept of the invention may be also readily used in the LTE-A RAN currently discussed by the 3GPP.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

**Claims**

1. A method for cell (re)selection within a heterogeneous mobile communication network, comprising macro cells and micro cells, wherein the heterogeneous mobile communication network comprises a mobility management entity managing mobility of a mobile terminal, wherein the mobile terminal is camping in a macro cell as its serving cell, the method comprising the step performed by the mobile terminal:

    repeatedly determining the signal quality within the macro cell the mobile terminal is camping in, and within a micro cell of the heterogeneous mobile communication system, while the mobile terminal camps in the macro cell, selecting the micro cell as the new serving cell, in case the following conditions are fulfilled:

        - the difference between the signal quality within the micro cell and the signal quality within the macro cell the mobile terminal is camping in is lower than the first threshold value but larger than a second threshold value for a threshold time period, and
        - the mobility management entity confirms the serving cell (re)selection in response to a tracking area update for the micro cell.

2. The method according to claim 1, wherein the mobile terminal is further selecting the micro cell as the new serving cell, in case the following conditions are fulfilled:

        - the mobility management entity confirms the serving cell (re)selection in response to a tracking area update for the micro cell, and
        - the difference between the signal quality within the micro cell and the signal quality within the macro cell the mobile terminal is camping in is above or equal to a first threshold value,

    wherein the tracking area update is a non-periodic tracking area update.

3. The method according to one of claims 1 or 2, wherein the micro cell selected as the new serving cell is a micro cell controlled by a mobile relay node.

4. The method according to claim 3, wherein the mobile terminal detects that it is moving with the micro cell and selects the micro cell as the new serving cell, in case:

        - the signal quality within the micro cell is approximately constant within the threshold time period,

- the signal quality within the macro cell is deteriorating within threshold time period, and
- the difference between the signal quality within the micro cell and the signal quality within the macro cell the mobile terminal is camping in is lower than the first threshold value but larger than a second threshold value for a threshold time period.

5. The method according to one of claim 1 to 4, further comprising the step of receiving from the mobility management entity tracking area information comprising a list of cell identifiers indicating one or more cells the mobile terminal is allowed to select as its serving cell without sending a tracking area update request message, and optionally receiving from a base station of the current serving cell a further list of cell identifiers indicating one or more cells the mobile terminal is not allowed to select as its serving cell.

6. The method according to one of claims 1 to 5, further comprising the step of transmitting a tracking area update request message to the mobility management entity, wherein the tracking area update comprises an identifier of the micro cell, wherein the mobile terminal is transmitting the tracking area update request message through its current serving cell to the mobility management entity.

7. The method according to one of claims 1 to 6, further comprising the step of receiving in response to a tracking area update request message, a tracking area update response message from the mobility management entity indicating whether the mobility management entity is confirming the selection of the micro cell as the new serving cell, wherein the mobility management entity confirms the request from the mobile terminal of the micro cell as the new serving cell by including the identifier of the micro cell within a list of cell identifiers comprised in the tracking area update response message, or rejects the request from the mobile terminal of the micro cell as the new serving cell by removing the cell identifier of the micro cell from a list of cell identifiers comprised in the tracking area update response message.

8. The method according to claim 7, wherein the list of cell identifiers indicating the cells the mobile terminal is allowed to select as its serving cell only comprises the identifier of the micro cell, in case the mobility management entity confirms the selection of the micro cell of the relay node.

9. The method according to one of claims 1 to 8, further comprising the step of receiving and storing system information from the micro cell upon the signal quality within the macro cell exceeding the second threshold value, wherein the mobile terminal reads and stores the system information of the micro cell even if the cell identifier of the micro cell is included in the list of cells not allowed for camping.

10. The method according to one of claims 1 to 9, wherein the mobile terminal either sends a proactive tracking area update request message or waits for the next scheduled periodic tracking area update request message depending on the mobility state of the mobile terminal.

11. The method according to one of claims 1 to 10, wherein the frequency of the signal quality measurement for determining the signal quality within the macro cell the mobile terminal is camping on and the signal quality within the micro cell of the heterogeneous mobile communication system depends on the signal quality measured in the micro cell.

12. A method for cell (re)selection within a heterogeneous mobile communication network, comprising macro cells and micro cells, wherein the heterogeneous mobile communication network comprises a mobility management entity managing mobility of a mobile terminal, wherein the mobile terminal is camping in a macro cell as its serving cell, the method comprising the step performed by the mobility management entity:

transmitting tracking area information to the mobile terminal, the tracking area information comprising a list of cell identifiers indicating one or more cells that the mobile terminal is allowed to select as its serving cell without sending a tracking area update,
receiving a tracking area update request message from the mobile terminal via the macro cell, being the current serving cell of the mobile terminal, wherein the tracking area update request message comprises a cell identifier of a micro cell,
deciding whether to allow the mobile terminal to select the micro cell indicated in the tracking area update request message as its new serving cell, and
if so, transmitting tracking area update accept message to the mobile terminal, wherein the tracking area update accept message comprises new tracking area information that indicates to the mobile terminal that it is allowed to select the micro cell as its serving cell, and

if not, transmitting tracking area update reject message to not allow the mobile terminal to select the indicated micro cell as its new serving cell.

**13.** A mobile terminal for use within a heterogeneous mobile communication network, comprising macro cells and micro cells, wherein the heterogeneous mobile communication network comprises a mobility management entity managing mobility of a mobile terminal, wherein the mobile terminal is camping in a macro cell as its serving cell and comprises:

a measurement unit adapted to repeatedly determine the signal quality within the macro cell the mobile terminal is camping in, and within a micro cell of the heterogeneous mobile communication system, while the mobile terminal camps in the macro cell, and

a selection unit for selecting the micro cell as the new serving cell, in case the following conditions are fulfilled:

- the difference between the signal quality within the micro cell and the signal quality within the macro cell the mobile terminal is camping in is lower than the first threshold value but larger than a second threshold value for a threshold time period, and
- the mobility management entity confirms the serving cell (re)selection in response to a tracking area update for the micro cell .

**14.** The mobile terminal according to claim 13, wherein the selection unit is adapted to select the micro cell as the new serving cell, in case the following conditions are fulfilled:

- the difference between the signal quality within the micro cell and the signal quality within the macro cell the mobile terminal is camping in is above or equal to a first threshold value , and
- the mobility management entity confirms the serving cell (re)selection in response to a tracking area update for the micro cell .

**15.** A mobility management entity for use within a heterogeneous mobile communication network, comprising macro cells and micro cells, wherein the heterogeneous mobile communication network comprises the mobility management entity managing mobility of a mobile terminal, wherein the mobility management entity comprises:

a transmitter unit adapted to transmit tracking area information to the mobile terminal, the tracking area information comprising a list of cell identifiers indicating one or more cells that the mobile terminal is allowed to select as its serving cell without sending a tracking area update,

a receiver unit adapted to receive a tracking area update request message from the mobile terminal via the macro cell, being the current serving cell of the mobile terminal, wherein the tracking area update request message comprises a cell identifier of a micro cell,

a processing unit adapted to decide whether to allow the mobile terminal to select the micro cell indicated in the tracking area update request message as its new serving cell, and

wherein the transmitter unit is adapted to transmit a tracking area update accept message to the mobile terminal in case the processing unit decides to allow the mobile terminal to select the micro cell as its new serving cell, wherein the tracking area update accept message comprises new tracking area information that indicates to the mobile terminal that it is allowed to select the micro cell as its serving cell; and

to transmit a tracking area update reject message to not allow the mobile terminal to select the indicated micro cell as its new serving cell, in case the processing unit decides to not allow the mobile terminal to select the micro cell as its new serving cell.

Operator Services

Internet

Untrusted non-3GPP IP access

PCRF

Rx+

SGi

SGi

ePDG

Wn

S7

S2b

HSS

PDN GW (PGW)

Trusted/Untrusted non-3GPP/3GPP IP access

S2c

S6a

S5

UE

Serving GW (SGW)

S2a

SGSN

S4

S11

S3

MME

S1-MME

S1u

eNodeB

GERAN

UTRAN

Trusted non-3GPP IP access

Uu

UE

**Fig. 1**

201

Perform Inter- and/or Intra-
Frequency Measurements
according to Measurement Rules
(e.g. given by the system information)

202

Determine Highest Ranked Cell
based on Cell Ranking
(Rank Cells on which measurements have
been performed according to frequency/
RAT evaluation, considering threshold values)

204

Remove Highest Ranked
Cell from Cell Ranking

203

Is the Highest Ranked Cell
according to Cell Ranking restricted?
(e.g. on BlackCellList)

yes

no

205

Does Highest Ranked
Cell have a sufficient Signal Quality
for Cell (Re)Selection?
(check offset)

no

206

Stay Camped on
Current Serving Cell

yes

207

(Re)Select Highest Ranked Cell
(Read System Information with CGI (TAI))

208

Highest Ranked Cell is
within the Tracking Area?

no

210

Enter CONNECTED mode in
Highets Ranked Cell

211

Send Tracking Area Update
via Highest Ranked Cell

212

Return to IDLE mode

yes

209

Stay in IDLE mode

Fig. 2

Fig. 3

| NAS | | | | | | | | | | NAS |
| RRC | | S1-AP | | | | | | | | S1-AP |
| | RRC | SCTP | | | | | | | | SCTP |
| | | IP | | | | IP | | | | |
| PDCP | PDCP | PDCP | PDCP | GTP-U | | GTP-U | IP | | IP | |
| | | | | UPD/IP | | UPD/IP | | | | |
| RLC | RLC | RLC | RLC | L2 | | L2 | L2 | | L2 | |
| MAC | MAC | MAC | MAC | | | | | | | |
| PHY | PHY | PHY | PHY | PHY | | PHY | PHY | | PHY | |

UE     Relay Node     Donor eNodeB     RN's S/PGW (S/PGW_RN)     UE's MME (MME_UE)

**Fig. 4**

EP 2 387 279 A1

| UE | Relay Node | | Donor eNodeB | | RN's S/PGW (S/PGW_RN) | | UE's S/PGW (S/PGW_UE) |
|---|---|---|---|---|---|---|---|
| | | GTP-U | | | | | IP |
| | | | | | | | GTP-U |
| | | UDP | | | | | UDP |
| IP | PDCP | IP | | | IP | | |
| | | | | GTP-U | GTP-U | IP | IP |
| PDCP | | PDCP | PDCP | UPD/IP | UPD/IP | | |
| RLC | RLC | RLC | RLC | | | | |
| | | | | L2 | L2 | L2 | L2 |
| MAC | MAC | MAC | MAC | | | | |
| PHY | PHY | PHY | PHY | PHY | PHY | PHY | PHY |

**Fig. 5**

Fig. 6

Fig. 7

Perform Inter- and/or Intra-
Frequency Measurements
according to Measurement Rules
(e.g. given by the system information) — 201

Determine Highest Ranked Cell
based on Cell Ranking
(Rank Cells on which measurements have
been performed according to frequency/
RAT evaluation, considering threshold values) — 202

Remove Highest Ranked
Cell from Cell Ranking — 204

Is the Highest Ranked Cell
according to Cell Ranking restricted?
(e.g. on BlackCellList) — 203

yes

no

Does
Highest Ranked Cell
have a sufficient Signal Quality
for Cell (Re)Selection? (check offsets HIGH
and ADEQUATE for
micro cells) — 801

no

Stay Camped on
Current Serving Cell — 802

yes

(Re)Select Highest Ranked Cell
(Read System Information with CGI (TAI)) — 803

Highest Ranked Cell is
within the Tracking Area? — 208

no

Enter CONNECTED mode in
Highets Ranked Cell — 210

Send Tracking Area Update
viaPrevious Serving Cell — 211

Return to IDLE mode — 212

yes

Stay in IDLE mode — 209

**Fig. 8**

32

Perform Inter- and/or Intra-
Frequency Measurements
according to Measurement Rules
(e.g. given by the system information) — 201

Determine Highest Ranked Cell
based on Cell Ranking
(Rank Cells on which measurements have
been performed according to frequency/
RAT evaluation, considering threshold values) — 202

Remove Highest Ranked
Cell from Cell Ranking — 204

Is the Highest Ranked Cell
according to Cell Ranking restricted?
(e.g. on BlackCellList) — 203

yes

Is the Highest Ranked Cell
a Micro Cell? — 901

no

yes

no

Does
Highest Ranked Cell
have a sufficient Signal Quality
for Cell (Re)Selection? (check offsets HIGH
and ADEQUATE for
micro cells) — 801

no

Stay Camped on
Current Serving Cell — 802

yes

(Re)Select Highest Ranked Cell
(Read System Information with CGI (TAI)) — 803

Highest Ranked Cell is
within the Tracking Area? — 208

no

Enter CONNECTED mode in
Highets Ranked Cell — 210

Send Tracking Area Update
via Previous Serving Cell — 211

Return to IDLE mode — 212

yes

Stay in IDLE mode — 209

## Fig. 9

1001

Is signal
quality in step 801 euqal to or
no = signal quality exceeds high — higher than ADEQUATE but — yes
lower than HIGH?

210

Enter CONNECTED mode in     no = medium or high mobility state     Is mobile terminal     1002
Highest Ranked Cell                                                  in normal mobility state?

1003

transmit proactive
tracking area update                                                          yes

212                                          1004

Return to IDLE mode          wait until next scheduled
periodic tracking area update

**Fig. 10**

Perform Inter- and/or Intra-
Frequency Measurements
according to Measurement Rules
(e.g. given by the system information) ⟋201

Determine Highest Ranked Cell ⟋202
based on Cell Ranking
(Rank Cells on which measurements have
been performed according to frequency/
RAT evaluation, considering threshold values)

Remove Highest Ranked ⟋204
Cell from Cell Ranking

Does
Highest Ranked Cell
have a sufficient Signal Quality ⟋801
for Cell (Re)Selection? (check offsets HIGH
and ADEQUATE for
micro cells)

no → Stay Camped on ⟋802
Current Serving Cell

yes

Is the Highest Ranked Cell ⟋203
according to Cell Ranking restricted?
(e.g. on BlackCellList)

yes →

no

(Re)Select Highest Ranked Cell ⟋803
(Read System Information with CGI (TAI))

Highest Ranked Cell is ⟋208
within the Tracking Area?

no → Enter CONNECTED mode in ⟋210
Highets Ranked Cell

Send Tracking Area Update ⟋211
viaPrevious Serving Cell

Return to IDLE mode ⟋212

yes

Stay in IDLE mode ⟋209

**Fig. 11**

Europäisches
Patentamt

European
Patent Office

Office européen
des brevets

# EUROPEAN SEARCH REPORT

Application Number

EP 10 00 4981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 034 750 A1 (FUJITSU LTD [JP]) 11 March 2009 (2009-03-11) * abstract * * paragraphs [0032] - [0036] * * paragraphs [0044] - [0054] * | 1-11,13, 14 | INV. H04W60/04 |
| A | VODAFONE GROUP: "HCS rules in High-mobility and Penalty Time", 3GPP DRAFT; R2-042292, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Yokohama, Japan; 20041112, 12 November 2004 (2004-11-12), XP050126880, [retrieved on 2004-11-12] * the whole document * | 1-11,13, 14 | |
| A | "LTE; Evolved Universal Terrestrial Radio Access (E-UTRA); User Equipment (UE) procedures in idle mode (3GPP TS 36.304 version 9.2.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 2, no. V9.2.0, 1 April 2010 (2010-04-01), XP014046903, * 5.2 Cell selection and reselection * | 1-11,13, 14 | TECHNICAL FIELDS SEARCHED (IPC) H04W |
| A | WO 2009/149431 A1 (QUALCOMM INC [US]; DESHPANDE MANOJ M [US]; PICA FRANCESCO [US]; HORN G) 10 December 2009 (2009-12-10) * paragraph [0074]; figure 4 * | 1-11,13, 14 | |

-/--

The present search report has been drawn up for all claims

| Place of search | Date of completion of the search | Examiner |
|---|---|---|
| Munich | 10 March 2011 | Wolf, William |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 10 00 4981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 879 414 A1 (NOKIA SIEMENS NETWORKS GMBH [DE]) 16 January 2008 (2008-01-16) * abstract * * claims 1-13 * | 12,15 | |
| A | WO 2008/131591 A1 (HUAWEI TECH CO LTD [CN]; QVARFORDT CHRISTER [SE]; SANDBERG DAVID [SE];) 6 November 2008 (2008-11-06) * abstract * * page 11, line 19 - line 32 * | 12,15 | |
| A | "LTE; General Packet Radio Service (GPRS) enhancements for Evolved Universal Terrestrial Radio Access Network (E-UTRAN) access (3GPP TS 23.401 version 9.4.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 2, no. V9.4.0, 1 March 2010 (2010-03-01), XP014046444, * 5.3.3 Tracking area update procedure * | 12,15 | TECHNICAL FIELDS SEARCHED (IPC) |

The present search report has been drawn up for all claims

| Place of search | Date of completion of the search | Examiner |
|---|---|---|
| Munich | 10 March 2011 | Wolf, William |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

Europäisches
Patentamt

European
Patent Office

Office européen
des brevets

Application Number

EP 10 00 4981

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 10 00 4981

The Search Division considers that the present European patent application does not comply with the requirements of unity of invention and relates to several inventions or groups of inventions, namely:

```
1. claims: 1-11, 13, 14

       Criteria for the selection of a micro cell, when the
       terminal is camping in a macro cell
                        ---

2. claims: 12, 15

       Mobility managing entity transmitting and receiving tracking
       area messages with a mobile terminal that will allow or not
       a mobile terminal to select a micro cell
                        ---
```

## ANNEX TO THE EUROPEAN SEARCH REPORT
## ON EUROPEAN PATENT APPLICATION NO.

EP 10 00 4981

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2011

| Patent document cited in search report | | Publication date | Patent family member(s) | | Publication date |
|---|---|---|---|---|---|
| EP 2034750 | A1 | 11-03-2009 | CN | 101480084 A | 08-07-2009 |
| | | | WO | 2008001452 A1 | 03-01-2008 |
| | | | US | 2009117905 A1 | 07-05-2009 |
| WO 2009149431 | A1 | 10-12-2009 | AU | 2009255969 A1 | 10-12-2009 |
| | | | CA | 2725459 A1 | 10-12-2009 |
| | | | US | 2009305699 A1 | 10-12-2009 |
| EP 1879414 | A1 | 16-01-2008 | WO | 2008006774 A1 | 17-01-2008 |
| WO 2008131591 | A1 | 06-11-2008 | CN | 101390430 A | 18-03-2009 |

EPO FORM P0459

For more details about this annex : see Official Journal of the European Patent Office, No. 12/82